# EUROPÄISCHE PATENTSCHRIFT

(11) **EP 2 096 340 B1**
(45) Veröffentlichungstag und Bekanntmachung des Hinweises auf die Patenterteilung: **07.07.2010**
(21) Anmeldenummer: 08003689.0
(22) Anmeldetag: 28.02.2008
(51) Int. Cl.: F16K 17/04, F16K 17/36

(54) **Ventil mit Sicherheitsvorrichtung**
Valve with safety device
Soupape dotée d'un dispositif de sécurité

(43) Veröffentlichungstag der Anmeldung: 02.09.2009
(73) Patentinhaber: Truma Gerätetechnik GmbH & Co. KG, 85640 Putzbrunn (DE)
(72) Erfinder: Piegsa, Siegfried, 85640 Putzbrunn (DE); Keidel, Michael, 82131 Königswiesen (DE)
(74) Vertreter: Müller - Hoffmann & Partner

(56) Entgegenhaltungen:
- DE-A1- 19 908 595
- US-A- 4 856 547
- US-A- 5 411 056
- US-A- 5 588 464

## Beschreibung

Die Erfindung betrifft ein Ventil mit Sicherheitsvorrichtung gemäß dem Patentanspruch 1.

Ein Ventil mit einer Sicherheitsvorrichtung ist aus dem Dokument US 4856547 bekannt.

Bei der Verwendung und beim Transport von flüssigen oder gasförmigen Stoffen, die eine Gefahr für Mensch oder Umwelt darstellen können, in einem Fahrzeug oder einem sonstigen bewegten System ist es notwendig, im Falle eines Unfalls ein unkontrolliertes Austreten des Stoffs zu verhindern. So ist beispielsweise in Reisemobilen und Wohnwagen nur dann der Betrieb einer Gasheizung während der Fahrt erlaubt, wenn das Fahrzeug mit einer Sicherheitseinrichtung ausgestattet ist, welche bei einem Leitungsabriss nach einem Unfall das Ausströmen von Gas auf der gesamten Leitungsstrecke vom Flaschenkasten bis zum Heizgerät verhindert.

Zur Gestaltung der Sicherheitseinrichtung sind verschiedene Ansätze bekannt.

So existieren Sicherheitseinrichtungen nach Art einer Schlauchbruchsicherung, die bei einer Beschädigung der Gasleitung auf den dynamischen Unterdruck reagieren, der durch ein Überschreiten eines bestimmten Volumenstromes an der Beschädigungsstelle entsteht. In einem solchen Fall wird die Gaszufuhr durch die Sicherheitseinrichtung unterbrochen. Sicherheitssysteme nach Art einer Schlauchbruchsicherung weisen allerdings verschiedene Nachteile auf: So löst ein solches System nicht aus, falls die Gasleitung nur eine geringe Undichtigkeit aufweist. Weiterhin muss bei der Installation eines solchen Systems der Normaldurchfluss der Gasleitungen bekannt sein, weshalb bei der Konstruktion und beim Einbau eines solchen Systems eine Durchflussberechnung der Gasleitungen und eine Anpassung an den Nenndurchfluss eines verwendeten Reglers notwendig ist. Dies verursacht einen Mehraufwand in Konstruktion und Einbau und führt darüber hinaus zu hohen Kosten in der Lagerhaltung, da bei einer Verwendung eines solchen Systems in unterschiedlichen Fahrzeugtypen eine Bevorratung mit dem jeweiligen System für jeden Fahrzeugtyp notwendig ist. Zudem ist die Nachrüstung eines solchen Systems z.B. in ein bestehendes Fahrzeug aufwendig und kann nur durch geschultes Personal durchgeführt werden, da hierzu eine umfangreiche Berechnung notwendig ist.

Weiterhin ist der Einsatz elektromagnetischer Sicherheitseinrichtungen bekannt. Diese weisen einen Crashsensor auf, dessen Signale durch ein elektronisches Steuergerät ausgewertet werden. Im Falle eines Unfalls erkennt das Steuergerät die auftretende Beschleunigung mit Hilfe des Crashsensors und steuert ein Magnetventil an, um die Gaszufuhr zu unterbrechen. Nachteilig an einem solchen System sind die hohen Kosten für das Steuergerät, die notwendige Versorgung des Steuergeräts und des Magnetventils mit elektrischer Hilfsenergie sowie der komplizierte Einbau mit geeigneter Positionierung und Verkabelung der Komponenten.

Darüber hinaus sind Systeme bekannt, die einen mechanischen Crashsensor nutzen, der als Wechselschalter im Falle eines Unfalls die Stromzufuhr zu einer Benzinpumpe oder zu einer Einspritzanlage eines Personenkraftwagens oder eines Kleintransporters unterbricht.

Der Erfindung liegt die Aufgabe zugrunde, ein Ventil mit einer Sicherheitsvorrichtung anzugeben, welches durch ein vereinfachtes Wirkprinzip ein sicheres Verschließen einer Gasflasche und einer Fluidleitung oder eines mit einem Gefahrgut beladenen Behälters beim Auftreten einer Beschleunigungskraft, die einen vorgegebenen Grenzwert überschreitet, gewährleistet. Weiterhin ist es Aufgabe der Erfindung, ein Ventil mit Sicherheitsvorrichtung anzugeben, welches kostengünstig in der Herstellung, im Einbau und im Betrieb ist und welches eine kostengünstige Nachrüstung ermöglicht.

Diese Aufgabe wird durch ein Ventil nach Patentanspruch 1 gelöst. Weiterentwicklungen der Erfindung sind den abhängigen Ansprüchen zu entnehmen.

Ein Ventil weist einen Einströmkanal zum Einströmen eines Fluids und einen Ausströmkanal zum Ausströmen des Fluids auf. Weiterhin ist ein Trägheitskörper vorhanden, dessen jeweilige Stellung einen jeweiligen Betriebszustand definiert. Der eine Betriebszustand ist ein Normalzustand, in dem der Trägheitskörper in einer definierten Ruheposition angeordnet ist. Der andere Betriebszustand ist ein Sicherheitszustand, in dem der Trägheitskörper aufgrund einer Wirkung einer Beschleunigungskraft, deren Betrag einen vordefinierten Grenzwert überschreitet, aus der Ruheposition ausgelenkt ist. Weiterhin ist eine Verschlusseinheit vorgesehen, die zwischen einer Offenstellung und einer Schließstellung bewegbar ist. In der Offenstellung ist weder der Einströmkanal noch der Ausströmkanal durch die Verschlusseinheit verschlossen. In der Schließstellung ist der Einströmkanal und/oder der Ausströmkanal durch die Verschlusseinheit dicht verschlossen. Zusätzlich ist eine Bewegungseinrichtung zum Bewegen der Verschlusseinheit zwischen der Offenstellung und der Schließstellung sowie eine Energiespeichereinrichtung zum Speichern einer mechanischen und/oder magnetischen Energie vorgesehen. Im Normalzustand speichert die Energiespeichereinrichtung die Energie, und die Verschlusseinheit steht in der Offenstellung. Im Sicherheitszustand hingegen wird die Verschlusseinheit durch die Bewegungseinrichtung mit Hilfe der Energie aus der Energiespeichereinrichtung aus der Offenstellung in die Schließstellung bewegt.

Das Fluid kann sowohl ein Gas als auch eine Flüssigkeit sein. Das Ventil kann für beliebige Gase und Flüssigkeiten verwendet werden und ermöglicht die Kontrolle ihres Durchströmens. Beispielsweise kann das Ventil für die Kontrolle des Durchströmens von Fluiden verwendet werden, die als Gefahrgüter anzusehen sind, da sie brennbar, explosiv, entzündlich oder giftig sind.

Der Einströmkanal ermöglich ein Einströmen des Fluids in das Ventil, wohingegen durch den Ausströmkanal das Fluid aus dem Ventil abgeführt wird. Der Einström-und der Ausströmkanal können durch Teile eines Rohrleitungssystems oder Aussparungen in einem festen Körper gebildet sein. Beide können jeweils in eine gemeinsame Ventilkammer münden. Es ist darüber hinaus möglich, dass das Ventil mehr als einen Ein- und/oder Ausströmkanal aufweist. Dies kann insbesondere dann der Fall sein, wenn das Ventil an einem Knotenpunkt eines komplexen Rohrleitungssystems angeordnet ist oder wenn es sich um ein Drei-Wege-Ventil für das kontrollierte Mischen von Fluidströmen handelt. Weitere Vorrichtungen können am Ein- und/oder am Ausströmkanal beliebig angeordnet werden.

Der Trägheitskörper kann durch einen beliebigen Körper gebildet sein, beispielsweise durch eine Kugel oder einen Zylinder. Die Masse des Trägheitskörpers kann so gewählt werden, dass bei der Wirkung einer Beschleunigung auf den Trägheitskörper eine Kraft wirkt, die eine bestimmungsgemäße Auslenkung des Trägheitskörpers ermöglicht.

Die Ruheposition des Trägheitskörpers kann durch eine festgelegte Position oder räumliche Anordnung bei der technischen Gestaltung des Ventils bestimmt werden. Die Anordnung des Trägheitskörpers in der Ruheposition kann durch geeignete Vorrichtungen unterstützt werden. So kann der Trägheitskörper beispielsweise durch eine fest mit ihm verbundene Achse in der Ruheposition gehalten werden, oder es kann eine Sitzfläche zur Lagerung des Trägheitskörpers in der Ruheposition vorgesehen sein. Die Form der Sitzfläche kann der Form des Trägheitskörpers angepasst sein. So kann beispielsweise, wenn als Trägheitskörper eine Kugel oder ein Zylinder verwendet wird, der Kugelsitz durch einen Körper mit einer runden, zylindrischen oder paraboloiden Aussparung oder einer Aussparung in Form eines Kugelsegments gebildet werden.

Auf dieser Sitzfläche kann der Trägheitskörper gelagert und beispielsweise durch seine Schwerkraft gehalten werden. Alternativ oder zusätzlich ist es möglich, dass der Trägheitskörper auf der Sitzfläche durch eine form- und/oder kraftschlüssige Verbindung gehalten wird. Dies kann beispielsweise durch eine Anordnung der Sitzfläche auf einem federbelasteten Stößel erreicht werden, wobei der Stößel durch eine Federkraft gegen den formschlüssig gehaltenen Trägheitskörper gepresst wird. Auch kann die Lagerung des Trägheitskörpers in der Ruheposition durch einen Beschwerungskörper stabilisiert werden, der durch die Schwerkraft den Trägheitskörper auf die Sitzfläche presst. Weiterhin ist es möglich, dass der Trägheitskörper aus einem magnetischen Material besteht und durch eine Magnetkraft an der Sitzfläche gehalten wird.

Der Trägheitskörper bestimmt durch seine jeweilige Stellung den Betriebszustand des Ventils. So befindet sich das Ventil im Normalzustand, wenn der Trägheitskörper sich in der Ruheposition befindet. In diesem Zustand ist ein Strömen des Fluids vom Einströmkanal in den Ausströmkanal möglich, was im Weiteren noch näher erläutert werden wird.

Wenn der Trägheitskörper hingegen aus der Ruheposition ausgelenkt ist, wird der Normalzustand verlassen, und das Ventil nimmt den Sicherheitszustand ein. Im Sicherheitszustand wird das Strömen des Fluids vom Einströmkanal in den Ausströmkanal unterbunden. Im Sicherheitszustand ist somit das Durchströmen des Ventils nicht möglich, was ein unkontrolliertes Austreten des Fluids aus einen sich an den Ausströmkanal anschließenden Leitungssystem, welches möglicherweise eine Beschädigung aufweist, verhindert.

Weitere alternative Gestaltungen des Ventils sind denkbar. So kann das Ventil auch derart gestaltet werden, dass im Sicherheitszustand das Strömen des Fluids vom Einströmkanal in den Ausströmkanal nicht vollständig unterbunden wird, sondern nur auf einen vorgegebenen Durchfluss beschränkt wird. Zudem ist es möglich, das Ventil im Normalzustand geschlossen zu halten, und im Sicherheitszustand durch eine Öffnung des Ventils ein Durchströmen des Fluids zu ermöglichen.

Der Übergang des Ventils vom Normalzustand in den Sicherheitszustand wird durch Auslenkung des Trägheitskörpers aus der Ruheposition ausgelöst. Die Auslenkung wird durch eine Beschleunigungskraft bewirkt, deren Betrag einen vordefinierten Grenzwert überschreitet. Die Bescheunigungskraft kann auf das Ventil oder auf ein übergeordnetes System, in welchem das Ventil fest verbaut ist, wirken. Ein solches übergeordnetes System kann ein Fahrzeug, beispielsweise ein Reisemobil, Wohnwagen oder Transporter sein, in dem das Ventil verbaut ist. Die Beschleunigungskraft kann dann beispielsweise bei einem Unfall auftreten. Die Richtung eines solchen Aufpralls und damit die Richtung der auftretenden Beschleunigungskraft ist dabei beliebig: Bei einer vektoriellen Darstellung der Beschleunigungskraft in einem zwei- oder dreidimensionalen Koordinatensystem, welches seinen Ursprung im Schwerpunkt des Trägheitskörpers hat, ist eine beliebige Ausrichtung des Vektors der Bescheunigungskraft denkbar ist. Sie kann daher das Ventil beschleunigen, abbremsen und/oder eine seitliche Beschleunigung oder Neigung bewirken.

Wenn der Betrag der Beschleunigungskraft einen vordefinierten Grenzwert überschreitet, wird der Trägheitskörper aus der Ruheposition ausgelenkt. Ist hingegen der Betrag der Beschleunigungskraft kleiner als der vordefinierte Grenzwert, bleibt der Trägheitskörper in der Ruheposition angeordnet. Der Grenzwert kann dabei den Funktionsanforderungen des Ventils entsprechend gewählt werden. Wird das Ventil beispielsweise für den Verbau in einem Reisemobil und/oder einem Wohnwagen konzipiert, kann der Grenzwert derart festgelegt werden, dass das Ventil beim Auftreten von geringen Beschleunigungskräften, die in typischen Fahrsituationen auftreten können, geöffnet bleibt, dass es aber beim Auftreten von Bescheunigungskräften, die ein Leitungssystem, durch das das Fluid geleitet wird, beschädigen können, schließt. Der Grenzwert kann beispielsweise in Anlehnung an die relevanten technischen Normen festgelegt werden.

Von dem vordefinierten Grenzwert hängen die Kräfte ab, die den Trägheitskörper in seiner Ruheposition halten. Dies kann beispielsweise die Schwerkraft sein, die den Trägheitskörper auf einer Sitzfläche hält, eine Reibungskraft, mit der der Trägheitskörper in einer formschlüssigen Verbindung gehalten wird, eine Federkraft, mit der der Trägheitskörper in eine formschlüssige Verbindung gepresst wird, oder eine Magnetkraft, mit der ein aus magnetischem Material bestehender Trägheitskörper an der magnetischen Sitzfläche gehalten wird. Diese Kraft wird zum einen durch Masse und Form des Trägheitskörpers bestimmt, zum anderen durch Material und Gestaltung der übrigen Strukturelemente des Ventils.

Nach der Auslenkung ist die räumliche Anordnung des Trägheitskörpers irrelevant. So ist es möglich, dass der Trägheitskörper nach der Auslenkung in einer anderen Position als der Ruheposition angeordnet ist. Beispielsweise kann er von der Sitzfläche herabgefallen sein. Ebenso ist es möglich, dass der Trägheitskörper nach der Auslenkung und dem damit verbundenen Verlassen der Ruheposition in die Ruheposition zurückbewegt wird. So kann der Trägheitskörper beispielsweise nach der Auslenkung aus der Ruheposition durch die Wirkung der Schwerkraft in die Ruheposition zurückrollen. Das Ventil verbleibt unabhängig davon im Sicherheitszustand, also geschlossen.

Für das Öffnen und Schließen des Ventils ist eine Verschlusseinheit vorgesehen, die zwischen einer Offenstellung und einer Schließstellung bewegbar ist. In der Offenstellung ist weder der Einströmkanal noch der Ausströmkanal verschlossen, so dass das Ventil von dem Fluid durchströmt werden kann. In der Schließstellung ist der Einströmkanal und/oder der Ausströmkanal dicht verschlossen, so dass ein Durchströmen des Ventils durch das Fluid unterbunden wird.

Die Verschlusseinheit kann durch einen Absperrkörper unterschiedlicher Gestaltung gebildet sein. So kann als Verschlusseinheit ein tellerförmiger Absperrkörper verwendet werden, wie er in Wasserhähnen oder Gasventilen verwendet wird. Alternativ kann das Ventil auch als Kugel- oder Zylinderventil, als Quetschventil oder als Rollmembranventil gestaltet sein.

Die Verschlusseinheit wird durch eine Bewegungseinrichtung zwischen der Offenstellung und der Schließstellung bewegt. Die Bewegungseinrichtung kann unterschiedlich gestaltet sein: So ist eine mechanische Gestaltung der Bewegungseinrichtung denkbar, bei der die Verschlusseinheit durch Übertragung einer Bewegung über feste und/oder gelenkige Verbindungen bewegt wird. Teil der Bewegungseinheit kann ein Ventilstößel sein, der beispielsweise durch einen stabförmigen Körper die Verschlusseinheit mit weiteren Strukturelementen der Bewegungseinheit verbinden kann. Weiterhin kann die Bewegungseinheit andere mechanische Strukturelemente aufweisen, die zur Übertragung einer Bewegung geeignet sind, wie beispielsweise einen Hebel, einen Kniehebel oder ein beweglich gelagertes Mitnehmerelement. Das Mitnehmerelement kann beispielsweise in Form eines Bügels oder eines Tellers gestaltet sein und bei einer Bewegung beispielsweise den Ventilstößel und damit die Verschlusseinheit in die Schließstellung bewegen.

Alternativ oder zusätzlich kann die Bewegungseinheit einen Freifallraum aufweisen, der einen freien Fall eines Körpers im Gravitationsfeld der Erde oder einem anderen Kraftfeld ermöglicht, wobei durch den Fall die Verschlusseinheit in die Schließstellung bewegt wird. Die Bewegung des Falls kann auf den Ventilstößel und/oder die Verschlusseinheit übertragen werden. Auch die Verschlusseinheit selbst kann durch die Bewegung des freien Falls in die Schließstellung bewegt werden.

Alternativ oder zusätzlich kann die Bewegungseinrichtung eine formschlüssige Verbindung zwischen mechanischen Strukturelementen aufweisen, über die die Bewegung des Trägheitskörpers bei seiner Auslenkung aus der Ruheposition auf die Bewegungseinheit und/oder die Verschlusseinheit übertragen wird.

Zusätzlich zu den genannten mechanischen Strukturelementen kann die Bewegungseinrichtung noch weitere, beispielsweise hydraulische Elemente zur Bewegungsübertragung aufweisen.

Die Energie, die durch die Bewegungseinrichtung in eine Bewegung umgesetzt und auf die Verschlusseinheit übertragen wird, kann im Normalzustand in einer Energiespeichereinrichtung gespeichert sein. Um eine Unabhängigkeit von einer zusätzlichen Versorgung des Ventils mit einer elektrischen Hilfsenergie zu erreichen, kann die Energie beispielsweise in Form von mechanischer und/oder magnetischer Energie gespeichert sein. Möglich ist beispielsweise eine Speicherung der Energie in Form von Federenergie oder potentieller Energie.

Als Elemente für die Aufnahme und Speicherung einer solchen Energie eignen sich Federeinrichtungen, die elastische Energie aufnehmen können, welche bei einer Entspannung einer Federeinrichtung freigesetzt wird. Dabei ist eine vollständige Entspannung nicht notwendig, die Federeinrichtung kann nach der Entspannung noch eine Restspannung aufweisen. Alternativ kann elastische Energie auch in hydraulischen Elementen gespeichert werden.

Die Energiespeichereinrichtung kann auch derart ausgelegt sein, dass ein Energiespeicherelement vorgesehen sein, welches durch seine Lage potentielle Energie speichert. Die Lageänderung des Energiespeicherelements kann beispielsweise durch freien Fall oder durch Bewegung eines aus magnetischem Material bestehenden Energiespeicherelements in einem magnetischen Feld entstehen.

Im Normalzustand des Ventils, in dem sich der Trägheitskörper in der Ruheposition befindet, speichert die Energiespeichereinrichtung die Energie. Wie oben bereits ausgeführt, befindet sich im Normalzustand die Verschlusseinheit in der Offenstellung. Wird nun der Trägheitskörper aus seiner Ruheposition ausgelenkt, geht das Ventil in den Sicherheitszustand über. Hierbei wird die in der Energiespeichereinrichtung gespeicherte Energie an die Bewegungseinrichtung abgegeben. Die Bewegungseinrichtung bewegt nun mit Hilfe der Energie aus der Energiespeichereinrichtung die Verschlusseinheit aus der Offenstellung in die Schließstellung.

In einer Ausführungsform der Erfindung kann in dem oben beschriebenen Ventil eine Sperreinrichtung vorgesehen sein, welche im Normalzustand ein Abgeben der Energie durch die Energiespeichereinrichtung verhindert, und welche im Sicherheitszustand das Abgeben der Energie durch die Energiespeichereinrichtung zulässt. Je nach Art der Energiespeichereinrichtung kann die Sperreinrichtung unterschiedlich gestaltet sein. So eignet sich beispielsweise ein fester Körper, um ein Abgeben der in einer Federeinrichtung gespeicherten Energie zu verhindern. Der Körper kann derart angeordnet sein, dass eine in einer Stauchung oder Streckung vorgespannte Feder sich nicht entspannen kann. Weiterhin ist es möglich, dass die Sperreinrichtung einen in einem Kraftfeld befindlichen Körper fixiert. So kann ein erhöht gelagerter Körper durch die Sperreinrichtung am Herabfallen gehindert werden. Ebenso kann ein in einem magnetischen Feld befindlicher magnetischer Körper durch die Sperreinrichtung an einer Bewegung durch das magnetische Feld gehindert werden. Weiterhin kann eine zwischen zwei Schenkeln eines Kniehebels vorgespannte Feder durch ein Überspannen des Kniehebels an einer Entspannung gehindert werden.

In einer Variante der Ausführungsform wird die Sperreinrichtung durch den Trägheitskörper gebildet, der in seiner Ruheposition derart angeordnet ist, dass das Abgeben der Energie durch die Energiespeichereinrichtung verhindert wird. So kann der in der Ruheposition gelagerte Trägheitskörper einen Kniehebel gegen die Kraft einer vorgespannten Federeinrichtung in einer Knickung halten, wodurch das Abgeben der in der Federeinrichtung gespeicherten elastischen Energie verhindert wird. Weiterhin ist es möglich, dass der Trägheitskörper in seiner Ruheposition zwischen zwei Klemmelementen eingeklemmt ist, wobei wenigstens eins der beiden Klemmelemente durch Vorspannung einer Federeinrichtung in Richtung des Trägheitskörpers gepresst wird. Auch in diesem Fall wird ein Abgeben der in der Federeinrichtung gespeicherten elastischen Energie durch den in der Ruheposition befindlichen Trägheitskörper verhindert. Falls die Energiespeichereinrichtung die Energie als potentielle Energie eines erhöht gelagerten Energiespeicherelements speichert, kann der Trägheitskörper durch seine Anordnung in der Ruheposition ein Herabfallen des Energiespeicherelements verhindern. So kann der Trägheitskörper in der Ruheposition beispielsweise zwischen dem Energiespeicherelement und einem Unterlager eingeklemmt sein. Eine derartige Anordnung des Trägheitskörpers kann auch gewählt werden, wenn die Energiespeichereinrichtung magnetische Energie durch Fixierung eines magnetischen Energiespeicherelements in einem Magnetfeld speichert. Auch in diesem Fall kann der Trägheitskörper zwischen dem Energiespeicherelement und einer dafür vorgesehenen Halterung eingeklemmt sein. Bei einer Auslenkung des Trägheitskörpers aus der Ruheposition kann sich das Energiespeicherelement ungehindert in dem Magnetfeld bewegen, wodurch die gespeicherte Energie in Bewegungsenergie umgesetzt und an die Bewegungseinrichtung abgegeben werden kann.

Die Energiespeichereinrichtung kann eine Federeinrichtung mit einer oder mehreren Federn aufweisen, welche im Normalzustand vorgespannt ist und welche sich im Sicherheitszustand entspannt. Weiterhin kann diese Form der Speicherung einer elastischen Energie durch weitere Formen der Energiespeicherung ergänzt werden. So kann eine Energiespeichereinrichtung Federelemente, Fallkörper und/oder magnetische Körper aufweisen. Die Sperreinrichtung kann dann, entsprechend der Gestaltung der Energiespeichereinrichtung, ebenfalls mehrere Sperrelemente aufweisen, welche nach einzelnen oder nach einer Kombination der genannten Prinzipien funktionieren.

In einer weiteren Ausführungsvariante weist die Bewegungseinrichtung einen Kniehebel auf, welcher im Normalzustand durch den in der Ruheposition befindlichen Trägheitskörper in einer Knickstellung gehalten wird. Durch die Knickstellung des Kniehebels wird die Energie in der Energiespeichereinrichtung gehalten. Nach Auslenkung des Trägheitskörpers wird der Kniehebel durch das Abgeben der Energie der Energiespeichereinrichtung in eine Streckung überführt, wobei die Verschlusseinheit in die Schließstellung bewegt wird.

Die Energiespeichereinrichtung kann in dieser Ausführungsvariante durch eine Federeinrichtung realisiert sein, die durch die Knickstellung des Kniehebels vorgespannt ist. Unterschiedliche Kombinationen und Anordnungen von Federeinrichtungen mit Druck- oder Zugfedern am Kniehebel sind zur Energiespeicherung sind denkbar. Weiterhin ist es möglich, dass die Energiespeichereinrichtung Magneten aufweist, die durch die Bewegung des Kniehebels relativ zueinander verschoben werden. Dadurch entstehen magnetische Felder, in denen Energie gespeichert wird. Für die Anordnung der Magneten bestehen prinzipiell dieselben Möglichkeiten wie für die Anordnung der Federeinrichtung. Außerdem ist es möglich, bei der Energiespeicherung die eben beschriebenen Möglichkeiten zur Speicherung elastischer Energie als auch zur Speicherung von magnetischer Energie zu kombinieren.

Bei einer Auslenkung des Trägheitskörpers aus der Ruheposition kann der Kniehebel in die eine Streckung bewegt werden. Die Bewegung des Kniehebels in die Streckung wird durch das Abgeben der in der Energiespeichereinrichtung gespeicherten Energie erreicht, beispielsweise durch ein Entspannen der Federeinrichtungen.

Die Bewegung des Kniehebels in die Streckung kann weiterhin auf die Verschlusseinheit übertragen werden, wodurch diese in die Schließstellung bewegt wird.

In einer weiteren Ausführungsform der Erfindung ist ein Schubelement vorgesehen, welches im Normalzustand durch den in Ruheposition befindlichen Trägheitskörper in einer Rückhaltestellung gehalten wird, und welches im Sicherheitszustand nach der Auslenkung des Trägheitskörpers durch die Energie aus der Energiespeichereinrichtung in eine Schubstellung bewegt wird. Bei der Bewegung in die Schubstellung wird die Verschlusseinheit durch die Bewegungseinrichtung in die Schließstellung bewegt. Das Schubelement kann so angeordnet sein, dass es im Sicherheitszustand einen Schub auf die Verschlusseinheit, auf die Bewegungseinrichtung und/oder auf Teile der Bewegungseinrichtung ausübt, wodurch die Verschlusseinheit in die Schließstellung bewegt wird.

Das Schubelement kann in einer beliebigen Form gestaltet sein, welche ein Halten des Schubelements in der Rückhaltestellung durch den in der Ruheposition befindlichen Trägheitskörper und gleichzeitig ein Übertragen des Schubs auf die Bewegungseinrichtung im Sicherheitszustand ermöglicht. So kann es beispielsweise ein Tellerelement, ein Riegelelement oder ein Bügelelement aufweisen.

Bei der Gestaltung des Schubelements als Bügelelement mit mehreren, weitgehend parallel verlaufenden, untereinander verbundenen Querstreben ist es möglich, eine Querstrebe für das Rückhalten des Schubelements durch den Trägheitskörper vorzusehen, und eine andere Querstrebe für die Ausübung des Schubs auf die Verschlusseinheit, die Bewegungseinrichtung oder Teile der Bewegungseinrichtung. Hierbei sollten die Verbindungsstreben zwischen den Querstreben des Bügelelements derart gestaltet werden, dass sie nicht die Auslenkung des Trägheitskörpers aus der Ruheposition behindern.

Es ist möglich, dass das Schubelement Teil der Energiespeichereinrichtung ist. So kann die Bewegung des Schubelements aus der Rückhaltestellung in die Schubstellung beispielsweise durch die Schwerkraft des Schubelements, eine Federkraft einer Federeinrichtung und/oder eine Magnetkraft bewirkt werden. So kann beispielsweise ein Bügelelement aus einem schweren Material den in der Ruheposition befindlichen Trägheitskörper durch seine Schwerkraft auf einem dafür vorgesehenen Unterlager fixieren. Das Unterlager kann dabei eine der Form des Trägheitskörpers angepasste Sitzfläche aufweisen. Nach einer Auslenkung des Trägheitskörpers aus der Ruheposition kann das Bügelelement durch die Schwerkraft in die Schubstellung bewegt werden.

Das Schubelement kann auch durch eine im Normalzustand in Vorspannung befindliche Federeinrichtung oder durch Magneten bei einer Auslenkung des Trägheitskörpers in die Schubstellung bewegt werden.

In einer weiteren Variante der Ausführungsform ist das Schubelement durch die Bewegungseinrichtung mit der Verschlusseinheit fest verbunden. Eine Bewegung des Schubelements aus der Rückhaltestellung in die Schubstellung kann damit unmittelbar auf die Verschlusseinheit übertragen werden.

In einer anderen Variante wird das Schubelement durch ein Mitnehmerelement gebildet, welches nicht mit der Bewegungseinrichtung verbunden ist. In dieser Variante kann das Mitnehmerelement beispielsweise tellerförmig oder riegelförmig gebildet sein. Das Mitnehmerelement kann so angeordnet sein, dass es in der Schubstellung einen Berührungspunkt zur Verschlusseinheit und/oder zur Bewegungseinrichtung erreicht, und dass bei dieser Berührung die Bewegung des Mitnehmerelements auf die Bewegungseinrichtung und die Verschlusseinheit übertragen wird. Hierdurch kann die Verschlusseinheit in die Schließstellung bewegt werden.

In einer weiteren Ausführungsform der Erfindung weist die Bewegungseinrichtung einen Kniehebel mit einer Federeinrichtung auf. Der Kniehebel ist im Normalzustand durch ein Vorspannen der Federeinrichtung in einer Überstreckung vorspannbar. Im Sicherheitszustand wird der Kniehebel durch den Trägheitskörper in eine Knickung bewegt, wobei die Knickung durch ein Entspannen der Federeinrichtung verstärkt wird. Beim Übergang in die Knickung wird die Verschlusseinheit in die Schließstellung bewegt.

Die Federeinrichtung kann in dieser Ausführungsform beispielsweise durch eine Zugfeder gebildet sein, die an ihren beiden Enden jeweils seitlich an den beiden Schenkeln des Kniehebels befestigt werden kann. Der Kniehebel kann über den Totpunkt hinaus in die Überstreckung bewegt und durch die Zugfeder in der Überstreckung stabilisiert werden.

Beim Übergang in den Sicherheitszustand kann die stabilisierte Überstreckung beispielsweise durch die bei der Auslenkung des Trägheitskörpers aus der Ruheposition wirkenden mechanischen Kräfte überwunden werden. Hierzu kann der Kniehebel aus der Überstreckung heraus über den Totpunkt hinweg in eine Knickung überführt werden. Dabei kann sich die Zugfeder relativ zu ihrer maximalen Spannung im Totpunkt entspannen, so dass die Knickung durch die Zugkraft der Zugfeder verstärkt und ebenfalls stabilisiert wird.

Um eine Bewegung der Verschlusseinheit beim Übergang in die Schließstellung zu erreichen, kann die Bewegung des Kniehebels beim Übergang aus der Überstreckung in die Knickung auf die Bewegungseinheit und damit auf die Verschlusseinheit übertragen werden. Hierzu ist es möglich, an einem Mittelgelenk des Kniehebels, welches sich zwischen den beiden Schenkeln befindet, einen Ventilstößel oder eine ähnliche mechanische Einrichtung für den Übertrag der Bewegung vorzusehen. Der Ventilstößel kann die Bewegung des Mittelgelenks bei der Überführung des Kniehebels aus der Überstreckung in die Knickung entlang seiner Längsachse auf die Verschlusseinheit übertragen, wodurch diese in die Schließstellung bewegt wird.

Es ist weiterhin möglich, die Bewegung der Verschlusseinheit, der Bewegungseinrichtung und/oder des Kniehebels durch weitere Federeinrichtungen zu verstärken. So ist es beispielsweise möglich, dass die Bewegungseinrichtung und/oder die Verschlusseinheit durch die Verbindung zum Kniehebel eine zweite Federeinrichtung in einer Vorspannung halten, während der Kniehebel sich in der Überstreckung befindet. Die somit in der zweiten Federeinrichtung gespeicherte Energie kann bei einer Überführung des Kniehebels in die Knickung zusätzlich freigesetzt werden und die Bewegung der Bewegungseinrichtung und/oder der Verschlusseinheit verstärken. Die zweite Federeinrichtung ist in diesem Fall Teil der Energiespeichereinrichtung.

Alternativ oder zusätzlich zur Verwendung der zweiten Federeinrichtung können auch zwei Magneten unterschiedlicher Polung als Teil der Energiespeichereinrichtung vorgesehen sein, welche bei einer Überstreckung des Kniehebels auseinandergezogen werden, und welche bei der Überführung des Kniehebels aus der Überstreckung in die Knickung das Bewegen der Verschlusseinheit in die Schließstellung, das Bewegen der Bewegungseinrichtung und/oder die Knickung des Kniehebels verstärken können.

In einer Variante dieser Ausführungsform ist es möglich, dass der Kniehebel durch einen Stoß des Trägheitskörpers bei der Auslenkung aus der Ruheposition aus der Überstreckung in die Knickung überführt wird. Der Stoß kann dabei gegen das Mittelgelenk und/oder gegen die Schenkel des Kniehebels ausgeführt werden. Eine Richtung und ein Betrag einer durch den Stoß wirkenden Kraft muss dabei geeignet sein, den Kniehebel aus seiner Überstreckung gegen den Widerstand der ersten Federeinrichtung in die Streckung im Totpunkt und darüber hinaus zu bewegen. Die Bewegung des Kniehebels über den Totpunkt hinaus kann klein sein. Sie kann sicherstellen, dass die Federeinrichtung bei ihrer nun folgenden Entspannung den Kniehebel in die Knickung zieht.

Ein solcher Stoß des Trägheitskörpers gegen den Kniehebel kann ermöglicht werden, indem die Ruheposition des Trägheitskörpers an einem Ort eines Behälters definiert wird, welcher in der bestimmungsgemäßen Einbaulage des Ventils tief gelegen ist. Die Innenfläche des Behälters kann derart gestaltet sein, dass der Trägheitskörper sich bei einer Bewegung aus der Ruheposition nach oben bewegen muss. Die Masse und Form des Trägheitskörpers sowie die räumliche Gestaltung der Innenfläche können so gewählt werden, dass der Trägheitskörper nur dann aus der Ruheposition ausgelenkt werden kann, wenn eine Beschleunigungskraft auf ihn wirkt, deren Betrag den vordefinierten Grenzwert überschreitet. Der Kniehebel kann derart angeordnet sein, dass er sich in der Überstreckung nah bei dem in der Ruheposition gelagerten Trägheitskörper befindet, und dass er bei der Auslenkung des Trägheitskörpers aus der Ruheposition den Stoß des Trägheitskörpers erfährt.

In einer weiteren Ausführungsvariante der Erfindung ist es möglich; dass der Trägheitskörper Teil der Energiespeichereinrichtung ist. So kann der Trägheitskörper beispielsweise durch seine Masse bei einer geeigneten Wahl der Ruheposition eine potentielle Energie speichern, die bei der Auslenkung des Trägheitskörpers aus der Ruheposition in eine Bewegungsenergie umgewandelt wird. Alternativ oder zusätzlich ist es möglich, dass der Trägheitskörper aus einem magnetischen Material besteht und dass er durch seine Lagerung in der Ruheposition in einem Magnetfeld eine magnetische Energie speichert. Auch in diesem Fall kann bei einer Auslenkung des Trägheitskörpers aus der Ruheposition die magnetische Energie in Bewegungsenergie umgewandelt werden.

In einer Variante dieser Ausführungsform wird eine Auslenkungsbewegung bei der Auslenkung des Trägheitskörpers durch eine formschlüssige Verbindung zur Bewegungseinrichtung übertragen, wodurch die Verschlusseinheit in die Schließstellung bewegt wird. Dabei können mechanische Übertragungselemente verwendet werden, die die Übertragung zwischen dem Trägheitskörper einerseits und der Bewegungseinrichtung andererseits sicherstellen.

Dies kann in einer Variante erreicht werden, indem die Auslenkungsbewegung durch einen mit dem Trägheitskörper fest verbundenen Übertragungskörper übertragen wird. Der Übertragungskörper kann dabei in einer Halterung beweglich gelagert sein. Die formschlüssige Verbindung zur Bewegungseinrichtung kann durch eine erste Aussparung im Übertragungskörper erreicht werden, welche bei einer Auslenkungsbewegung in eine andere Position verschoben wird.

Zur Übertragung der Auslenkungsbewegung von dem Trägheitskörper auf den Übertragungskörper kann eine feste Verbindung zwischen beiden vorgesehen werden. Diese kann durch eine stabförmige Achse gebildet sein, welche an dem einen ihrer Enden mit dem Trägheitskörper und an dem anderen ihrer Enden mit dem Übertragungskörper verbunden ist. Der Trägheitskörper kann nun in der Ruheposition im Gleichgewicht oberhalb des Übertragungskörpers gelagert sein. Bei der Auslenkung aus der Ruheposition kann der Trägheitskörper der Schwerkraft folgend ausgelenkt werden, wobei die potentielle Energie in kinetische Energie umgewandelt und die durch die Achse auf den Übertragungskörper übertragen wird.

Der Übertragungskörper kann derart geformt sein, dass er die Auslenkungsbewegung des Trägheitskörpers in unterschiedlichen Richtungen überträgt. So kann der Übertragungskörper beispielsweise weitgehend kugelförmig gestaltet sein, wenn eine Auslenkungsbewegung des Trägheitskörpers in jede beliebige Richtung, also beispielsweise mit einem beliebigen Winkel zwischen 0° und 360°, übertragen werden soll. Soll hingegen eine Auslenkung des Trägheitskörpers nur in zwei entgegengesetzten Richtungen ermöglicht und auf den Übertragungskörper übertragen werden, kann der Übertragungskörper beispielsweise weitgehend zylindrisch gestaltet werden.

Um eine formschlüssige Verbindung vom Übertragungskörper zur Bewegungseinrichtung zu ermöglichen, kann eine erste Aussparung im Übertragungskörper vorgesehen sein. In diese erste Aussparung kann ein Teil der Bewegungseinrichtung eingelassen sein, wenn der Trägheitskörper in der Ruheposition gelagert ist. Bei der Auslenkungsbewegung, die vom Trägheitskörper auf den Übertragungskörper übertragen wird, kann die erste Aussparung in eine andere Position verschoben werden. Dabei kann der zuvor in der ersten Aussparung eingelassene Teil der Bewegungseinrichtung formschlüssig herausgedrängt werden. Die dadurch entstehende Bewegung der Bewegungseinrichtung kann dann an die Verschlusseinheit übertragen werden, wobei diese in die Schließstellung bewegt wird.

In einer Variante kann die Bewegungseinrichtung eine Kuppe aufweisen, welche im Normalzustand in die erste Aussparung eingelassen ist, und welche beim Übergang in den Sicherheitszustand durch die Verschiebung der ersten Aussparung in eine andere Position formschlüssig verschoben wird, wobei die Verschlusseinheit aus der Offenstellung in die Schließstellung bewegt wird.

Die Gestaltungen der Oberfläche der Kuppe und der Oberfläche der ersten Aussparung, welche bei der Auslenkungsbewegung formschlüssig aneinander vorbeigeführt werden, können aufeinander abgestimmt werden. Die Kuppe kann beispielsweise in Form einer Halbkugel oder eines Paraboloids gestaltet sein. Durch eine geeignete Gestaltung der Oberfläche der Kuppe und der Oberfläche der ersten Aussparung kann erreicht werden, dass Reibungskräfte minimiert werden oder dass der Trägheitskörper in der Ruheposition stabilisiert wird.

Um sicherzustellen, dass sich die Kuppe in der ersten Aussparung befindet, wenn der Trägheitskörper in der Ruheposition gelagert ist, kann eine Federeinrichtung vorgesehen sein. Diese Federeinrichtung kann die Kuppe in Richtung des Übertragungskörpers pressen. Dadurch kann die Übertragung der Auslenkungsbewegung auf die Bewegungseinrichtung unterstützt und gleichzeitig eine Stabilisierung des Trägheitskörpers in der Ruheposition erreicht werden.

Zudem ist es möglich, weitere Federeinrichtungen vorzusehen, die eine Übertragung der Auslenkungsbewegung über die Bewegungseinrichtung auf die Verschlusseinheit unterstützen. So kann ein Anpressdruck der Verschlusseinheit gegenüber einer Öffnung des Einströmkanals und/oder des Ausströmkanals in der Schließstellung durch eine weitere Federeinrichtung verstärkt werden.

Bei einer weiteren Variante dieser Ausführungsform kann eine zweite Aussparung vorgesehen sein, welche derart angeordnet ist, dass im Sicherheitszustand die Kuppe der Bewegungseinrichtung in der zweiten Aussparung eingelassen ist. Dadurch wird der Trägheitskörper in der ausgelenkten Position fixiert.

Die Gestaltung der zweiten Aussparung kann den möglichen Auslenkungsbewegungen des Trägheitskörpers und damit den möglichen Bewegungen des Übertragungskörpers angepasst sein.

Um beim Einlassen der Kuppe in die zweite Aussparung eine Bewegung der Verschlusseinheit aus der Schließstellung in die Offenstellung zu verhindern, kann die zweite Aussparung eine geringere Tiefe aufweisen als die erst Aussparung. Das Einlassen der Kuppe in die zweite Aussparung kann durch eine Federeinrichtung unterstützt werden. So kann eine Stabilisierung der Lage des Übertragungskörpers und damit eine zusätzliche Fixierung des Trägheitskörpers in der ausgelenkten Position erreicht werden.

In einer anderen Variante besteht der Trägheitskörper aus einem magnetischen Material. Außerdem ist ein Magnet an der Ruheposition des Trägheitskörpers vorgesehen, der den Trägheitskörper im Normalzustand durch eine Magnetkraft in der Ruheposition hält. Zusätzlich zu der Magnetkraft kann in ähnlich gestalteten Ausführungsvarianten der Trägheitskörper auch durch die Schwerkraft und/oder eine Reibungskraft in der Ruheposition gehalten werden.

In einer weiteren Ausführungsform der Erfindung wird die Verschlusseinheit durch den Trägheitskörper gebildet. Dieser kann nach der Auslenkung aus der Ruheposition in eine Lage bewegt wird, in der er den Einströmkanal und/oder den Ausströmkanal verschließen kann. Form und Material des Trägheitskörpers können derart gewählt werden, dass ein dichtes Verschließen des Ein- und/oder des Ausströmkanals möglich ist.

In einer weiteren Variante der Ausführungsform kann die Verschlusseinheit durch potentielle Energie in die Schließstellung bewegt werden. Hierbei ist zu gewährleisten, dass das Ventil in einer Einbaulage angeordnet ist, in der die Schließstellung unterhalb der Offenstellung der Verschlusseinheit angeordnet ist. Wird bei einer solchen Anordnung die Verschlusseinheit durch den Trägheitskörper gebildet, so kann die Schwerkraft den Trägheitskörper nach dessen Auslenkung aus der Ruheposition in die Schließstellung bewegen.

In einer weiteren Variante besteht die Verschlusseinheit aus einem magnetischen Material und wird durch magnetische und/oder potentielle Energie in die Schließstellung bewegt. Hierzu kann ein Verschlussmagnet in einer Umgebung der Schließstellung angeordnet sein, welcher die Verschlusseinheit durch das zwischen dem Verschlussmagneten und der Verschlusseinheit entstehende magnetische Feld in die Schließstellung bewegt. Der Verschlussmagnet kann die Verschlusseinheit in der Schließstellung halten und somit die Dichtkraft erhöhen. Beispielsweise ist es möglich, den Rand der Öffnung des Ein- und/oder Ausströmkanals mit dem Verschlussmagneten zu bestücken. Wenn der Rand des Ein-und/oder Ausströmkanals kreisförmig ist, kann hierfür beispielsweise ein ringförmiger Magnet verwendet werden.

In einer weiteren Ausführungsform ist eine Rückstelleinrichtung zum Rückstellen des Trägheitskörpers in die Ruheposition durch einen Bediener vorgesehen. Die Rückstelleinrichtung kann den Bediener dabei unterstützen das Ventil aus dem Sicherheitszustand in den Normalzustand zu überführen. Hierzu kann der Trägheitskörper, der im Sicherheitszustand aus der Ruheposition ausgelenkt ist, in die Ruheposition zurückgeführt werden.

Eine Rückführung des Trägheitskörpers in die Ruheposition ist durch verschiedene manuelle Eingriffe möglich. So kann beispielsweise ein Rücksetzstößel vorgesehen sein, welcher durch den Bediener in eine Umgebung des ausgelenkten Trägheitskörpers bewegt werden kann. Mit Hilfe des Rücksetzstößels kann der Trägheitskörper dann in die Ruheposition bewegt werden. Um den Trägheitskörper mit dem Rücksetzstößel bewegen zu können, kann der Trägheitskörpers am Rücksetzstößel fixiert werden. So kann der Rücksetzstößel beispielsweise eine Sitzfläche aufweisen, auf welche der Trägheitskörper beispielsweise durch die Schwerkraft, eine Magnetkraft und/oder ein manuelles Eingreifen des Bedieners bewegt werden kann. Auf der Sitzfläche kann der Trägheitskörper durch die Schwerkraft, die Magnetkraft und/oder eine Reibungskraft gehalten werden. Dadurch wird das Rückstellen des Trägheitskörpers in die Ruheposition ermöglicht.

Es ist weiterhin möglich, dass die Rückstelleinrichtung es ermöglicht, den Trägheitskörper durch einen manuellen Eingriff des Bedieners in die Ruheposition zu bewegen. So kann die Rückstelleinrichtung beispielsweise das Entfernen eines im Sicherheitszustand in der Ruheposition des Trägheitskörpers gelagerten Elements ermöglichen, so dass ein manuelles Rücksetzen des Trägheitskörpers in die Ruheposition ermöglicht wird. Zudem ist es möglich, dass der Trägheitskörper für den Bediener direkt zugänglich angeordnet ist, so dass er manuell in die Ruheposition überführt werden kann.

In einer Ausführungsvariante wird beim Rückstellen die Energie in der Energiespeichereinrichtung gespeichert. Dies kann durch ein Vorspannen einer Federeinrichtung, ein Anheben eines Fallkörpers und/oder ein Erzeugen eines Magnetfeldes erreicht werden. So kann an der Rückstelleinrichtung beispielsweise eine Federeinrichtung vorgesehen sein, die beim Rückstellen vorgespannt wird. Bei der Verwendung eines Rücksetzstößels kann die Federeinrichtung beispielsweise am Rücksetzstößel angeordnet sein und beim Rückstellen zusammengedrückt werden.

Weiterhin ist es möglich, dass der Rücksetzstößel durch eine Zugfeder gehalten wird. Beim Rückstellen ist in diesem Fall eine Energie aufzuwenden, um den Rücksetzstößel zu bewegen. Diese Energie kann nach dem Rückstellen beispielsweise in Form von potentieller Energie in dem in der Ruheposition angeordneten Trägheitskörper gespeichert sein.

Eine solche Speicherung von potentieller Energie beim Rückstellen kann beispielsweise bei Verwendung von einem aus einem magnetischen Material bestehenden Trägheitskörper durch Anordnung eines Magneten an dem Rücksetzstößel erreicht werden. In diesem Fall kann der Trägheitskörper beim Rückstellen durch den am Rücksetzstößel angeordneten Magneten in die Ruheposition gehoben werden, wobei die potentielle Energie in der Lage des Trägheitskörpers gespeichert wird.

Wenn zusätzlich in dieser Anordnung ein weiterer Magnet an einem dem Rücksetzstößel entgegen gesetzten Ende des Ventils angeordnet ist, entsteht beim Anheben des magnetischen Trägheitskörpers zusätzlich ein Magnetfeld, in dem magnetische Energie gespeichert ist.

Weiterhin kann ein Ventil gemäß einer der beschriebenen Ausführungsformen eine Transportsicherung aufweisen, welche den Trägheitskörper in einer Position, die beispielsweise die Ruheposition sein kann, fixiert. Diese Transportsicherung kann ein unbeabsichtigtes Bewegen der Verschlusseinheit in die Schließstellung verhindern. Nach einem Einbau des Ventils in ein übergeordnetes System kann die Transportsicherung entfernt werden, um ein erfindungsgemäßes Funktionieren des Ventils zu ermöglichen.

Die oben beschriebenen mechanischen Strukturelemente des Ventils reagieren unmittelbar auf das Auftreten einer Beschleunigungskraft, die den vordefinierten Grenzwert überschreitet. Beim Einbau des Ventils beispielsweise in ein Fahrzeug führt dies zu einer unmittelbaren Reaktion auf ein primäres Signal bei einem Unfall, nämlich auf die auftretende Beschleunigungskraft. Diese Reaktion ist unabhängig von weiteren, sekundären Signalen, wie beispielsweise einem auftretenden Unterdruck im Leitungssystem, welcher abhängig vom Grad der Beschädigung des Leitungssystems sein kann. Die unmittelbare mechanische Reaktion auf das primäre Signal und die mechanische Umsetzung der Funktion eines erfindungsgemäßen Ventils ermöglicht ein sicheres Funktionieren. Weiterhin ist eine Bereitstellung von elektrischer Hilfsenergie nicht notwendig.

Diese und weitere Merkmale der Erfindung werden nachfolgend anhand von Beispielen unter Zuhilfenahme der begleitenden Figuren näher erläutert. Es zeigen:
- **Fig. 1**: schematisch ein erstes Ausführungsbeispiel;
- **Fig. 2a**: schematisch ein zweites Ausführungsbeispiel;
- **Fig. 2b**: das Ausführungsbeispiel von Fig. 2a in einer Seitenansicht;
- **Fig. 3**: schematisch ein drittes Ausführungsbeispiel;
- **Fig. 4a**: schematisch ein viertes Ausführungsbeispiel;
- **Fig. 4b**: das Ausführungsbeispiel von Fig. 4a im Sicherheitszustand;
- **Fig. 5a**: schematisch ein fünftes Ausführungsbeispiel;
- **Fig. 5b**: das Ausführungsbeispiel von Fig. 5a im Sicherheitszustand; und
- **Fig. 6**: schematisch ein sechstes Ausführungsbeispiel.

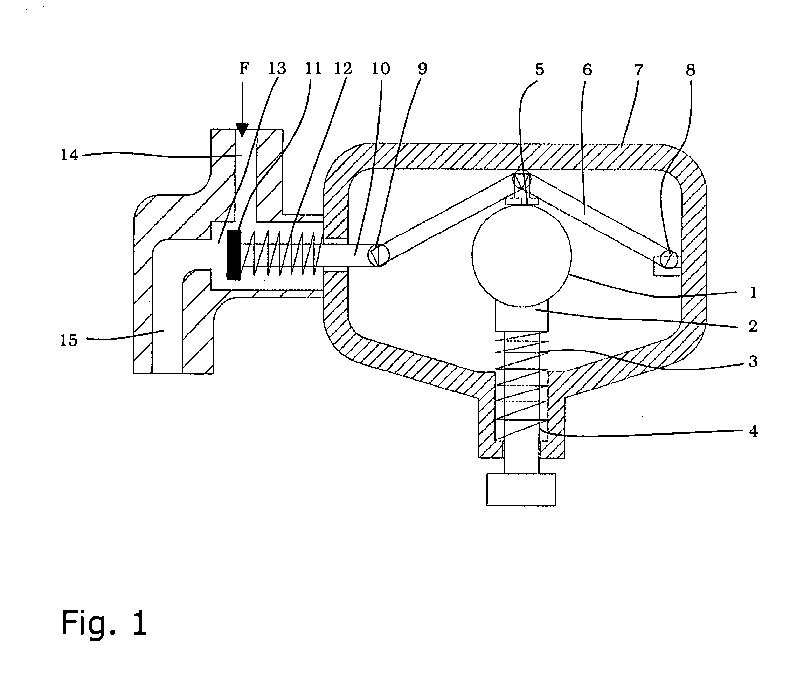

Fig. 1 zeigt eine Schnittansicht eins erfindungsgemäßen Ventils, bei dem ein Trägheitskörper 1 in Form einer Kugel gestaltet ist, welche in einer Ruheposition auf einer Sitzfläche 2 gelagert ist. Die Sitzfläche 2 ist auf einem Rücksetzstößel 3 vorgesehen und konkav ausgeführt. Der Rücksetzstößel 3 wird durch eine erste Druckfeder 4 von einer Seite gegen den Trägheitskörper 1 gepresst. Auf der gegenüberliegenden Seite wird der Trägheitskörper 1 durch ein Halteelement 5 gehalten, welches am Mittelgelenk eines Kniehebels 6 vorgesehen ist. Durch den Anpressdruck der Druckfeder 4 entsteht eine formschlüssige Verbindung, welche durch eine Klemmung den Trägheitskörper 1 in seiner Ruheposition zwischen der Sitzfläche 2 und dem Halteelement 5 des Kniehebels 6 hält.

Der Kniehebel 6 wird durch den in der Ruheposition befindlichen Trägheitskörper 1 in einer Knickstellung gehalten. Die Knickstellung kann dabei durch die Anordnung des Kniehebels 6 im Gehäuse 7 begrenzt werden. Alternativ können begrenzende Anschläge vorgesehen sein.

Der Kniehebel 6 ist mit einem seiner Schenkel durch ein erstes Verbindungsgelenk 8 mit dem Gehäuse 7 verbunden. An dem anderen Schenkel des Kniehebels 6 ist ein zweites Verbindungsgelenk 9 vorgesehen, welches den Kniehebel mit einem Ventilstößel 10 verbindet. An dem nicht mit dem Kniehebel 6 verbundenen Ende des Ventilstößels 10 ist eine beispielsweise durch einen Ventilteller gebildete Verschlusseinheit 11 angeordnet.

Die Verschlusseinheit 11 ist über eine zweite Druckfeder 12 gegen das Gehäuse 7 abgestützt. Durch ihre Anordnung kann die Druckfeder 12 eine Bewegung der Verschlusseinheit 11 abhängig von der Bewegungsrichtung verstärken oder hemmen. Weiterhin kann die Verschlusseinheit 11 die formschlüssige Verbindung, durch welche der Trägheitskörper 1 in seiner Ruheposition gehalten wird, verstärken. Bei einer entsprechenden Abstimmung von Eigenschaften wie beispielsweise der Federsteifigkeiten der ersten und der zweiten Druckfeder 4, 12 kann der Kniehebel 6 auch ohne zusätzliche begrenzende Anschläge durch den in der Ruheposition angeordneten Trägheitskörper 1 in der Knickstellung gehalten werden.

Die Verschlusseinheit 11 ist in einer Ventilkammer 13 beweglich angeordnet. Zu der Ventilkammer 13 führen ein Einströmkanal 14 und ein Ausströmkanal 15, durch die ein Fluid F in die Ventilkammer 13 ein- bzw. ausströmen kann.

Das in Fig. 1 dargestellte Ventil befindet sich in einem Normalzustand, in dem der Trägheitskörper 1 auf der Sitzfläche 2 des Rücksetzstößels 3 in der Ruheposition angeordnet ist. Durch diese Anordnung des Trägheitskörpers 1 wird der Kniehebel 6 in einer Knickstellung gehalten. Durch die Knickstellung des Kniehebels 6 werden die äußeren Endpunkte seiner Schenkel, an denen sich das erste und das zweite Verbindungsgelenk 8 und 9 befinden, zueinander bewegt. Da das erste Verbindungsgelenk 8 fest mit dem Gehäuse 7 verbunden ist, bewegt sich das zweite Verbindungsgelenk 9 relativ zum Gehäuse 7. Diese Bewegung wird auf den mit dem zweiten Verbindungsgelenk 9 verbundenen Ventilstößel 10 und auf die Ventilverschlusseinheit 11 übertragen. Die Ventilverschlusseinheit 11 wird so in die Offenstellung bewegt, in welcher weder der Einströmkanal 14 noch der Ausströmkanal 15 durch die Verschlusseinheit 11 verschlossen ist. Durch die Bewegung der Verschlusseinheit 1 in die Offenstellung wird die Druckfeder 12 vorgespannt. Hierdurch wird eine elastische Energie in der Druckfeder 12 gespeichert.

Wird das in Fig. 1 dargestellte Ventil mit einer Beschleunigungskraft beaufschlagt, deren Betrag einen vordefinierten Grenzwert nicht überschreitet, so wird der Trägheitskörper 1 durch die oben beschriebene kraft- und/oder formschlüssige Verbindung in der Ruheposition gehalten. Überschreitet der Betrag der Beschleunigungskraft den vordefinierten Grenzwert hingegen, so wird der Trägheitskörper 1 aus der Ruheposition ausgelenkt. Die für die Auslenkung des Trägheitskörpers 1 aus der Ruheposition benötigte Beschleunigungskraft hängt dabei von der Form und der Oberflächenbeschaffenheit des Trägheitskörpers 1, der Sitzfläche 2 und des Halteelements 5 sowie von den Eigenschaften der Druckfedern 4 und 12 ab.

Bei einer Auslenkung des Trägheitskörpers 1 aus der in Fig. 1 dargestellten Ruheposition geht das Ventil in einen Sicherheitszustand über. Der Trägheitskörper 1 wird dabei aus der kraft- und/oder formschlüssigen Verbindung zwischen der Sitzfläche 2 und dem Halteelement 5 gelöst. Dadurch kann der Kniehebel 6 mit Hilfe der in der Druckfeder 12 gespeicherten elastischen Energie in eine Streckung überführt werden. Bei dieser Streckung wird der Ventilstößel 10 entlang seiner Längsachse verschoben, wodurch die Verschlusseinheit 11 aus der Offenstellung in eine Schließstellung bewegt wird. Bei der Entspannung der Druckfeder 12 kann eine teilweise Restspannung erhalten bleiben, die die Verschlusseinheit 11 in der Schließstellung fixiert. Die Verschlusseinheit 11 verschließt in der Schließstellung den von der Ventilkammer 13 abgehenden Ausströmkanal 15, wodurch ein weiteres Durchströmen der Ventilkammer 13 mit dem Fluid F unterbunden wird.

Der Kniehebel 6 und der Ventilstößel 10 bilden beim Übergang in den Sicherheitszustand Teile einer Bewegungseinrichtung zum Bewegen der Verschlusseinheit 11. Die Druckfeder 12 ist Teil einer Energiespeichereinrichtung. Der Trägheitskörper 1 ist Teil einer Sperreinrichtung, die im Normalzustand ein Abgeben der Energie durch die Druckfeder 12 verhindert.

Der Trägheitskörper 1 der in Fig. 1 dargestellten Ausführungsvariante wird nach seiner Auslenkung durch seine Schwerkraft innerhalb des Gehäuses 7 an die tiefstgelegene Stelle bewegt. Durch eine entsprechende Gestaltung und Anordnung des Gehäuses 7 kann erreicht werden, dass der ausgelenkte Trägheitskörper 1 nach der Auslenkung zum Rücksetzstößel 3 bewegt wird. Durch einen Bediener kann der Rücksetzstößel 3 manuell aus dem Gehäuse 7 herausbewegt werden, wobei die Druckfeder 4 zusammengedrückt wird. Bei einer entsprechenden Anordnung des Ventils kann der ausgelenkte Trägheitskörper 1 dann durch die Schwerkraft auf die Sitzfläche 2 bewegt werden. Ein manuelles, durch die Federkraft der Druckfeder 4 unterstütztes Rückführen des Rücksetzstößels 3 in die in Fig. 1 dargestellte Position bewirkt dann eine Anordnung des Trägheitskörpers 1 in der Ruheposition. Dadurch wird der Kniehebel 6 in die Knickung bewegt. Gleichzeitig wird durch den Ventilstößel 10 die Verschlusseinheit 11 aus der Schließstellung in die Offenstellung bewegt. Hierbei wird die Druckfeder 12 an der Verschlusseinheit 11 vorgespannt. Durch die Bewegung der Verschlusseinheit 11 in die Offenstellung kann das Fluid F wieder durch die Ventilkammer 13 strömen.

Die in Fig. 1 dargestellte Ausführungsvariante kann um weitere Elemente ergänzt werden, die die Funktion des Ventils unterstützen. So kann beispielsweise eine weitere Druckfeder vorgesehen werden, die das Halteelement 5 mit dem Gehäuse 7 verbindet, und die die kraft- und/oder formschlüssige Verbindung, in der der Trägheitskörper 1 gehalten wird, unterstützt. Eine solche Druckfeder kann Teil der Energiespeichereinrichtung sein und die Bewegung des Kniehebels 6 in die Streckung und damit die Bewegung der Verschlusseinheit 11 in die Schließstellung verstärken. Diese Druckfeder kann die Druckfeder 12 auch vollständig ersetzen, wenn eine Führung des Ventilstößels 10 entlang seiner Längsachse sichergestellt ist.

Weiterhin ist es möglich, die in Fig. 1 dargestellten und genannten Druckfedern durch in entgegengesetzter Richtung wirkende Zugfedern und/oder durch Paare von Magneten zu ersetzen. Die Paare von Magneten können an Stellen angeordnet werden, an denen die Enden der genannten Druckfedern befestigt sind. Durch ihre Anziehungs- bzw. Abstoßungskräfte und die in den zwischen ihnen erzeugten Magnetfeldern gespeicherte Energie können sie wie die oben beschriebenen Federeinrichtungen wirken.
Fig. 1 zeigt somit ein Ausführungsbeispiel, bei dem die Bewegungseinrichtung den Kniehebel 6 aufweist, und bei dem der Kniehebel 6 durch den in einer Ruheposition befindlichen Trägheitskörper 1 in der Knickstellung gehalten wird, wodurch die Verschlusseinheit 11 in der Offenstellung gehalten wird.

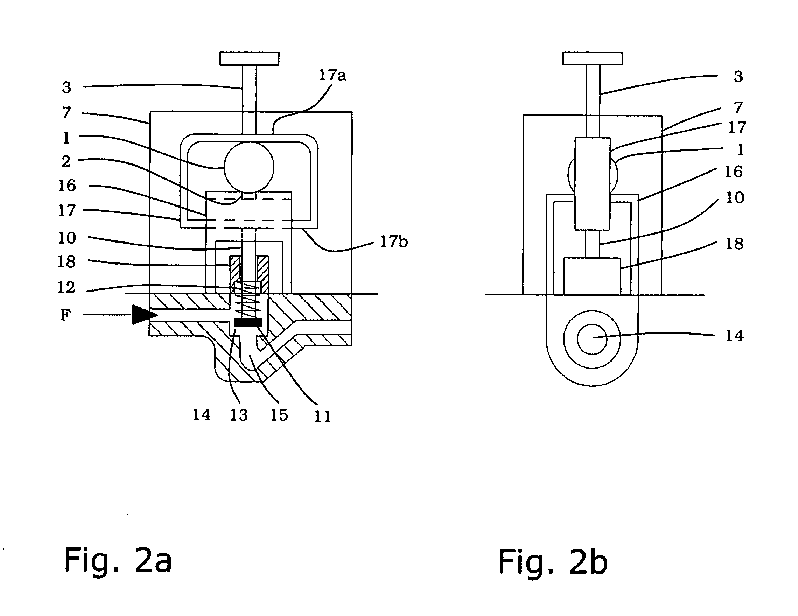

Fig. 2a zeigt eine weitere Ausgestaltung eines erfindungsgemäßen Ventils in einer frontalen Schnittansicht.

Der Trägheitskörper 1 ist hier in der Ruheposition auf einer Sitzfläche 2 gelagert, welche beispielsweise durch eine runde oder konkave Aussparung in einem Unterlager 16 gebildet sein kann. Weiterhin ist ein Bügel 17 vorgesehen, dessen obere Querstrebe 17a auf dem Trägheitskörper 1 gelagert ist, so dass der Trägheitskörper 1 durch die Schwerkraft des Bügels 17 und/oder die Federkraft einer hier ebenfalls vorgesehenen Druckfeder 12 zwischen der oberen Querstrebe 17a und dem Unterlager 16 eingeklemmt ist. Die untere Querstrebe 17b des Bügels 17 ist fest mit dem Ventilstößel 10 verbunden. Am entgegengesetzten Ende des Ventilstößels 10 ist die Verschlusseinheit 11 angeordnet, welche beweglich in die Ventilkammer 13 eingelassen ist. Auch hier ist die Verschlusseinheit 11 mit der Druckfeder 12 verbunden, wobei die Druckfeder 12 an ihrem anderen Ende mit einer Federhalterung 18 verbunden ist.

Zur Ventilkammer 13 führt wie in Fig. 1 der Einströmkanal 14, der das Einströmen des Fluids F in die Ventilkammer 13 ermöglicht. Ein Ausströmen des Fluids F aus der Ventilkammer 13 wird durch den Ausströmkanal 15 ermöglicht. Das Ventil wird von dem Gehäuse 7 umschlossen. Der Rücksetzstößel 3 ist mit der oberen Querstrebe 17a des Bügels 17 verbunden und führt aus dem Gehäuse 7 heraus.

Fig. 2a zeigt die Ausführungsvariante im Normalzustand. Der Trägheitskörper 1 ist in der Ruheposition zwischen der Sitzfläche 2 des Unterlagers 16 und der oberen Querstrebe 17a des Bügels 17 eingeklemmt. Der Bügel 17 wird durch den Trägheitskörper 1 in einer erhöhten Rückhaltestellung zurückgehalten. Hierdurch wird potentielle Energie in der Lage des Bügels 17 und in der Vorspannung der Druckfeder 12 gespeichert.

Wird der Trägheitskörper durch die Wirkung der Beschleunigungskraft aus der Ruheposition ausgelenkt, so kann der Bügel 17 durch die Schwerkraft herab gezogen werden. Hierbei kann auch die Druckfeder 12 mitwirken. Er wird dabei aus der Rückhaltestellung in eine Schubstellung bewegt. Diese Bewegung wird durch den mit der unteren Querstrebe 17b verbundenen Ventilstößel 10 auf die Verschlusseinheit 11 übertragen, so dass diese aus der Offenstellung in die Schließstellung bewegt wird. Diese Bewegung kann zusätzlich durch die Federkraft der Druckfeder 12 verstärkt werden. Auch in dieser Ausführungsvariante muss die Druckfeder 12 beim Übergang in den Sicherheitszustand nicht vollständig entspannt werden, so dass eine Restspannung erhalten bleiben kann, mit der die Verschlusseinheit 11 gegen den Eingang des Ausströmkanals 15 gepresst werden kann. Ein Durchströmen des Ventils mit dem Fluid F wird so im Sicherheitszustand unterbunden.

Wegen der gespeicherten potentiellen Energie können der Bügel 17 und die Druckfeder 12 als Teile der Energiespeichereinrichtung gesehen werden. Der Trägheitskörper 1 wirkt als Sperreinrichtung, indem er in der Ruheposition ein Abgeben der potentiellen Energie des Bügels 17 verhindert.

Nach einer Auslenkung des Trägheitskörpers 1 aus der Ruheposition und einem Übergang des Ventils in den Sicherheitszustand kann der Rücksetzstößel 3 manuell durch den Bediener betätigt werden. Hierbei wird der Bügel 17 entgegen der Schwerkraft und der Federkraft der Druckfeder 12 wieder in die Rückhaltestellung bewegt. Eine Fixierung des Bügels 17 in der Rückhaltestellung kann durch Anordnung des Trägheitskörpers 1 in der Ruheposition erreicht werden. Hierzu kann beispielsweise das Gehäuse 7 geöffnet werden, so dass eine manuelle Rückführung des Trägheitskörpers 1 in die Ruheposition möglich ist.

Auch in dieser Ausführungsvariante können weitere Strukturelemente ergänzt werden, um die Funktion des Ventils zu unterstützen. So ermöglicht beispielsweise die Anordnung einer weiteren Druckfeder zwischen der oberen Querstrebe 17a des Bügels 17 und dem Gehäuse 7 eine vom Gravitationsfeld der Erde unabhängige Einbaulage der Ausführungsvariante des Ventils: In diesem Fall kann der Bügel 17 unabhängig von seiner Schwerkraft durch die Federkräfte der Druckfeder 12 und der weiteren Druckfeder aus der Rückhaltestellung in die Schubstellung bewegt werden. Weiterhin ist auch hier, wie bereits zu Fig. 1 beschrieben, eine analoge Verwendung von Zugfedern oder eine Verwendung von paarweise angeordneten Magneten zur Energiespeicherung möglich.

Fig. 2a zeigt somit ein Ausführungsbeispiel, bei dem die Bewegungseinrichtung den Bügel 17 aufweist, welcher über den Ventilstößel 10 mit der Verschlusseinheit 11 verbunden ist, und welcher durch den in der Ruheposition gelagerten Trägheitskörper 1 in der Rückhaltestellung gehalten wird.

Fig. 2b zeigt die Ausführungsvariante aus Fig. 2a in einer seitlichen Schnittansicht. Hier wird beispielhaft die bewegliche Anordnung des Bügels 17, welcher mit dem Ventilstößel 10 verbunden ist, in Relation zum Unterlager 16 verdeutlicht.

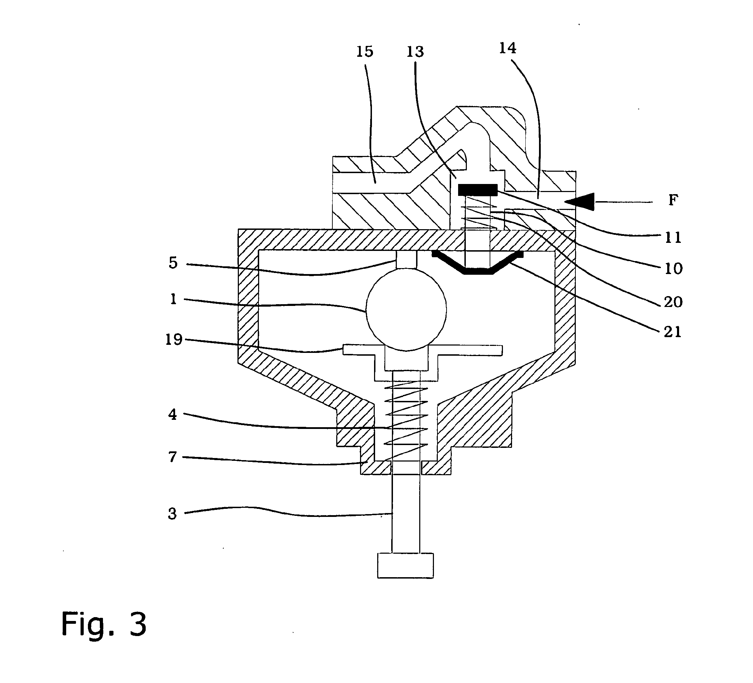

Fig. 3 zeigt eine Schnittansicht einer weiteren Ausführungsvariante, bei der der Trägheitskörper 1 auf einem Kugelsitz 19 gelagert ist. Auch in dieser Variante ist der Rücksetzstößel 3 vorgesehen, der an einem Ende mit dem Kugelsitz 19 verbunden ist. Die Druckfeder 4 ist am Ventilstößel 3 zwischen dem Gehäuse 7 und dem Kugelsitz 19 angeordnet. Gegenüber dem Kugelsitz 19 und in Richtung des Drucks der Druckfeder 4 ist am Gehäuse 7 das Halteelement 5 angeordnet. Zwischen dem Kugelsitz 19 und dem Halteelement 5 wird der Trägheitskörper 1 durch die Kraft der Druckfeder 4 eingeklemmt.

Weiterhin ist der Ventilstößel 10 so angeordnet, dass mit seiner Hilfe die beweglich in die Ventilkammer 13 eingelassene Verschlusseinheit 11 bewegt werden kann. Die Verschlusseinheit 11 ist dabei mit einer Zugfeder 20 mit dem Gehäuse 7 verbunden, wobei die Zugfeder 20 die Verschlusseinheit 11 im Normalzustand in der Offenstellung hält. Dabei sind weder der Einströmkanal 14 noch der Ausströmkanal 15 durch die Verschlusseinheit verschlossen.

Der Ventilstößel 10 ist in der dargestellten Ausführungsvariante durch eine Membrankappe 21 mit dem Gehäuse 7 verbunden. Die Membrankappe 21 kann einerseits als Dichtung zur Ventilkammer 13 vorgesehen sein, andererseits aber auch durch eine Zugkraft den Ventilstößel 10 in einer Rückhalteposition fixieren, wodurch die Verschlusseinheit 11 in der Offenstellung gehalten wird. Dies kann beispielsweise durch eine gewölbte Ausgangsstellung der unbelasteten Membrankappe 21 erreicht werden.

In der Ruheposition wirkt der Trägheitskörper 1 als Sperreinrichtung, die das Abgeben der in der Druckfeder 4 gespeicherten Energie im Normalzustand verhindert. Der Kugelsitz 19 wirkt in dieser Anordnung als Schubelement, das durch den in der Ruheposition befindlichen Trägheitskörper 1 in der Rückhaltestellung gehalten wird.

Nach der Auslenkung des Trägheitskörpers 1 kann der Kugelsitz 19 durch die Federkraft der Druckfeder 4 in eine Schubstellung bewegt werden. Der Kugelsitz 19 wirkt dann als ein Mitnehmerelement, das in der Schubstellung durch die Kraft der Druckfeder 4 gegen die Membrankappe 21 und den mit ihr verbundenen Ventilstößel 10 gedrückt wird. Bei der Bewegung des Kugelsitzes 19 in die Schubstellung wird die im Normalzustand in der Druckfeder 4 gespeicherte Energie in eine Bewegungsenergie umgewandelt, die durch den Kugelsitz 19 auf den Ventilstößel 10 und damit auf die Verschlusseinheit 11 übertragen wird. Die Druckfeder 4 muss dabei nicht vollständig entspannt werden, eine verbleibende Restspannung kann einen Anpressdruck gegen den Ventilstößel 10 und damit auch einen Anpressdruck der Verschlusseinheit 11 gegen den Ausströmkanal 15 bewirken. Durch die Bewegung des Kugelsitzes 19 in die Schubstellung wird die Verschlusseinheit 11 aus der Offenstellung in die Schließstellung bewegt, wodurch der Ausströmkanal 15 fest verschlossen wird.

Wenn sich das Ventil im Sicherheitszustand befindet, kann mit Hilfe des Rücksetzstößels 3 durch den Bediener der Kugelsitz 19 aus der Schubstellung in eine Rückstellstellung bewegt werden. Dabei wird der Trägheitskörper 1 durch seine Schwerkraft auf den in Rückstellstellung befindlichen Kugelsitz 19 bewegt. Nach einem Loslassen des Rücksetzstößels 3 wird der Trägheitskörper 1 in der Ruheposition zwischen dem in der Rückhaltestellung befindlichen Kugelsitz 19 und dem Halteelement 5 geklemmt. Durch die Kraft der Zugfeder 20 und/oder der Membrankappe 21 wird nun die Verschlusseinheit 11 aus der Schließstellung in die Offenstellung bewegt.

Fig. 3 zeigt somit ein Ausführungsbeispiel, bei dem die Bewegungseinheit das Mitnehmerelement 19 aufweist, welches durch den in der Ruheposition gelagerten Trägheitskörper 1 in der Rückhaltestellung gehalten wird.

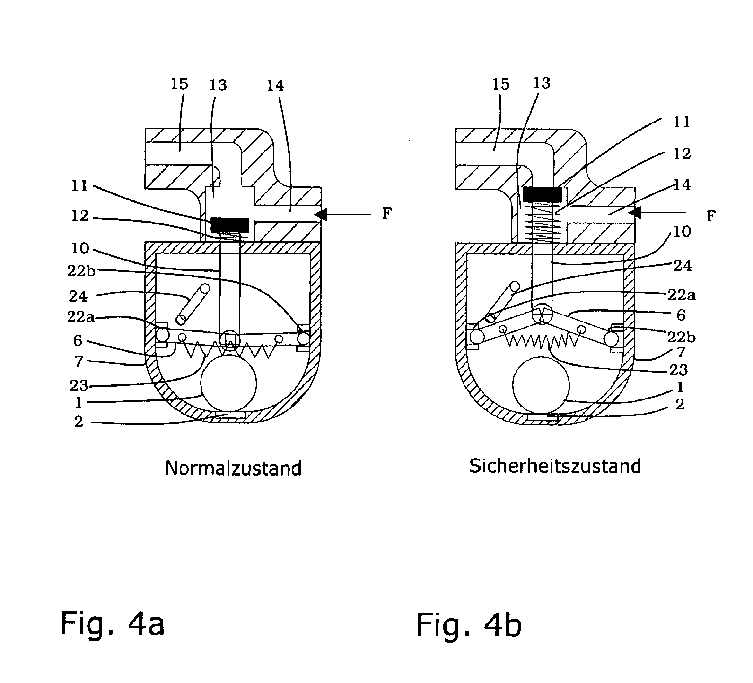

Fig. 4a zeigt eine Schnittansicht einer weiteren möglichen Ausgestaltung. Hier ist in dem Gehäuse 7 an der tiefstgelegenen Stelle eine konkave Vertiefung ausgespart, in deren Mittelpunkt sich die Sitzfläche 2 befindet, auf der der Trägheitskörper 1 in der Ruheposition gelagert ist. Die Sitzfläche kann einen Magneten aufweisen, der den Trägheitskörper 1 zusätzlich in seiner Ruheposition hält.

Der Kniehebel 6 kann oberhalb von dem in der Ruheposition gelagerten Trägheitskörpers 1 derart angeordnet werden, dass der Kniehebel 6 in eine Streckung und darüber hinaus auch in eine Überstreckung bewegt werden kann. Die Streckung ist dadurch gekennzeichnet, dass zwischen den beiden Schenkeln des Kniehebels 6 ein Winkel von 180° vorliegt. Die Überstreckung ist dadurch gekennzeichnet, dass zwischen den beiden Schenkeln des Kniehebels 6 auf der dem Trägheitskörper 1 zugewandten Seite ein Winkel größer 180° vorliegt.

Um eine entsprechende Bewegbarkeit des Kniehebels 6 zu ermöglichen, kann dieser an seinen beiden äußeren Enden mit gelenkigen Verbindungen 22a, 22b mit dem Gehäuse 7 verbunden sein. Die gelenkigen Verbindungen 22a, 22b können beispielsweise mit einer Längsführung, einer Buchse oder einem Langloch derart ausgestaltet sein, dass neben einem Bewegungswinkel des jeweils in die gelenkige Verbindung 22a, 22b eingelassenen Schenkels des Kniehebels 6 auch eine Bewegung des Scheitelpunkts des Bewegungswinkels in Bezug auf das Gehäuse 7 ermöglicht wird. So kann eine flexible Kopplung zwischen den Enden des Kniehebels 6 und dem Gehäuse 7 erreicht werden, die auch eine Änderung der Länge zwischen den äußeren Enden des Kniehebels 6 beispielsweise bei seiner Überführung aus der Knickung in die Streckung und weiter in die Überstreckung ermöglicht.

Die Anordnung des Kniehebels 6 kann weiterhin so gewählt sein, dass sowohl in der Streckung als auch in der Überstreckung der Kniehebel 6 den in der Ruheposition gelagerten Trägheitskörper 1 nicht berührt.

Der Kniehebel 6 weist eine Spannfeder 23 auf, welche symmetrisch zum Mittelpunkt des Kniehebels 6 mit jeweils einem ihrer Enden an jeweils einem Schenkel des Kniehebels 6 befestigt ist, und welche so angebracht ist, dass sie, wenn der Kniehebel 6 in die Überstreckung bewegt wird, seitlich an den beiden Schenkeln des Kniehebels 6 und an seinem Mittelgelenk vorbeibewegt werden kann. In der Streckung des Kniehebels 6 weist die Spannfeder 23 eine maximale Dehnung auf.

Weiterhin kann eine Rücksetzeinrichtung 24 vorgesehen sein, die ein Überführen des Kniehebels 6 in die Überstreckung beispielsweise durch das Betätigen eines beispielsweise außen am Gehäuse angebrachten Hebels (nicht dargestellt) ermöglicht. Hierdurch kann ein Druck auf den Kniehebel 6 übertragen, der diesen auch gegen der Widerstand der Spannfeder 23 über den Totpunkt hinaus in die Überstreckung überführt. Wird der Kniehebel 6 über die Streckung und damit über seinen Totpunkt hinaus in die Überstreckung bewegt, kann sich die Spannfeder 23 relativ zur maximalen Dehnung entspannen, wodurch der Kniehebel 6 in der Überstreckung gehalten und fixiert wird.

Am Mittelgelenk des Kniehebels 6 ist beweglich das eine Ende des Ventilstößels 10 befestigt. Am anderen Ende des Ventilstößels 10 ist die Verschlusseinheit 11 vorgesehen, welche beweglich in die Ventilkammer 13 eingelassen ist, und welche durch die Druckfeder 12 mit dem Gehäuse 7 verbunden ist. Bei einer Bewegung des Kniehebels 6 kann in einer solchen Anordnung dessen Mittelgelenk verschoben werden. Diese Bewegung kann in eine Bewegung entlang der Mittelachse des Ventilstößels 10 umgesetzt werden. Durch die Bewegung des Ventilstößels 10 kann die Verschlusseinheit 11 zwischen der Offenstellung und der Schließstellung bewegt werden.

Fig. 4a zeigt die Ausführungsvariante im Normalzustand. Dabei ist der Trägheitskörper 1 auf der Sitzfläche 2 in der Ruheposition gelagert, und der Kniehebel 6 ist durch die Spannfeder 23 in der Überstreckung vorgespannt. Durch diese Vorspannung wird die durch den Ventilstößel 10 mit dem Mittelgelenk des Kniehebels 6 verbundene Verschlusseinheit 11 gegen die Kraft der Druckfeder 12 in der Offenstellung gehalten. Das Fluid F kann dabei ungehindert durch den Einströmkanal 14 in die Ventilkammer 13 und anschließend in den Ausströmkanal 15 strömen.

Fig. 4a zeigt somit ein Ausführungsbeispiel, bei dem die Bewegungseinrichtung den mit der Spannfeder 23 in der Überstreckung vorgespannten Kniehebel 6 aufweist, welcher über den Ventilstößel 10 die Verschlusseinheit 11 in der Offenstellung hält.

Fig. 4b zeigt eine Schnittansicht der Ausführungsvariante aus Fig. 4a im Sicherheitszustand. Durch die Wirkung der Beschleunigungskraft kann der Trägheitskörper 1 aus der Ruheposition ausgelenkt werden, wobei er durch die konkav geformte Wand des Gehäuses auch nach oben bewegt wird. Der Trägheitskörper 1 stößt dadurch gegen den in der Überstreckung vorgespannten Kniehebel 6. Der Kniehebel 6 wird dadurch aus der Überstreckung über seinen Totpunkt hinaus in eine Knickung bewegt. Die Knickung wird durch die Federkraft der Spannfeder 23 verstärkt. Durch die Knickung des Kniehebels 6 wird der Ventilstößel 10 entlang seiner Mittelachse bewegt und überträgt diese Bewegung auf die mit ihm verbundene Verschlusseinheit 11. Die Verschlusseinheit 11 wird so aus der Offenstellung in die Schließstellung bewegt. Die Bewegung der Verschlusseinheit aus der Offenstellung in die Schließstellung kann durch die Federkraft der Druckfeder 12 verstärkt werden, da sich diese nach Bewegung des Kniehebels 6 in die Knickung entspannen kann. Eine möglicherweise verbleibende Restspannung der Druckfeder 12 kann den Anpressdruck der Verschlusseinheit 11 gegen die Öffnung des Ausströmkanals 15 erhöhen.

Durch ein Betätigen der Rücksetzeinrichtung 24 kann der Kniehebel 6 zurück in die Überstreckung bewegt werden. Dies geschieht gegen den Druck der Druckfeder 12 und den Zug der Spannfeder 23, so dass diese dabei eine elastische Energie speichern können.

Die Spannfeder 23 kann im Normalzustand als Sperreinrichtung wirken, welche ein Abgeben der in der Druckfeder 12 gespeicherten Energie verhindert. Gleichzeitig kann sie selbst Teil der Energiespeichereinrichtung sein oder die Energiespeichereinrichtung vollständig bilden. Der Kniehebel 6 und der Ventilstößel 10 können in dieser Ausführungsvariante als Bewegungseinrichtung wirken, die die Bewegung des Trägheitskörpers 1 bei der Auslenkung aus der Ruheposition auf die Verschlusseinheit 11 überträgt.

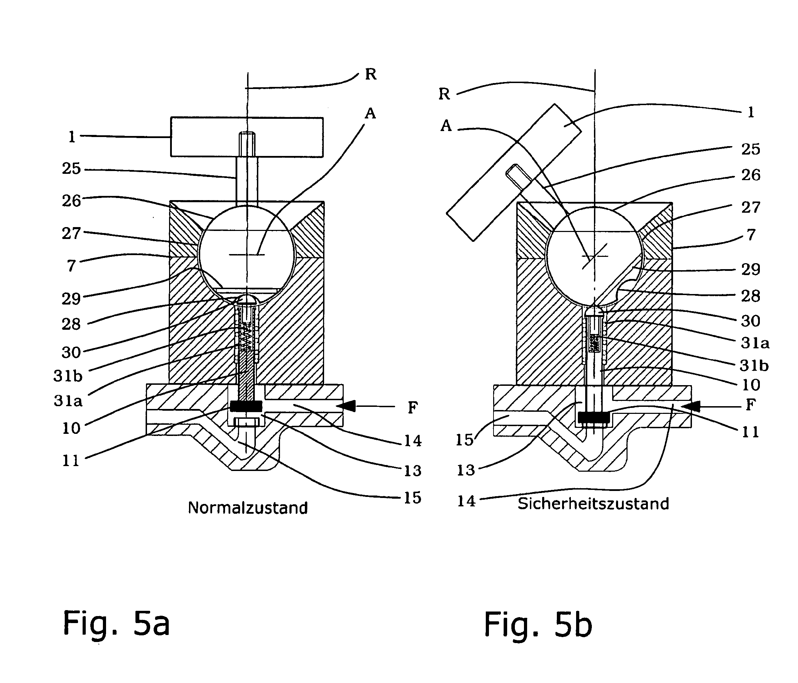

In Fig. 5a wird in einer Schnittansicht eine weitere Ausführungsvariante eines erfindungsgemäßen Ventils gezeigt.

Hier ist der Trägheitskörper 1 in Form einer Kreisscheibe gestaltet, welche mit einer Verbindungsachse 25 mit einem Übertragungskörper 26 verbunden ist. Der Übertragungskörper 26 ist dabei beweglich in einer Halterung 27 gelagert, welche durch eine Aussparung im Gehäuse 7 gebildet werden kann. In dem Ausführungsbeispiel ist der Übertragungskörper 26 kugelförmig gestaltet, um eine Auslenkung beziehungsweise Verschwenkung des Trägheitskörpers 1 in beliebiger Richtung zu ermöglichen. Die Form der Halterung 27 kann der Form des Übertragungskörpers 26 angepasst werden und ein Spiel lassen, das ein freies Drehen des Übertragungskörpers 26 in eine beliebige Richtung ermöglicht.

Der Übertragungskörper 26 kann eine erste Aussparung 28 und eine zweite Aussparung 29 aufweisen. In die erste Aussparung 28 ist in dem in Fig. 5a dargestellten Normalzustand eine Kuppe 30 eingelassen. Die Kuppe 30 ist über eine Federmechanik bestehend aus einer äußeren Feder 31a und einer inneren Feder 31b mit dem Ventilstößel 10 verbunden. Dabei bewirkt die äußere Feder 31a, dass die Kuppe 30 in Richtung des Übertragungskörpers 1 gepresst wird. Die innere Feder 31b bewirkt, dass eine Bewegung der Kuppe 30 vom Übertragungskörper 26 weg auf den Ventilstößel 10 und die mit dem Ventilstößel 10 verbundene Verschlusseinheit 11 übertragen wird. Die Verschlusseinheit 11 ist beweglich in die Ventilkammer 13 eingelassen und kann dort zwischen der Offenstellung und der Schließstellung bewegt werden.

In Fig. 5a ist die Ausführungsvariante im Normalzustand dargestellt. Dabei ruht der Trägheitskörper 1 auf der senkrecht stehenden Verbindungsachse 25 und damit auf dem in einer Ausgangsstellung gelagerten Übertragungskörper 26. Die senkrechte Ausrichtung der Verbindungsachse 25 wird in Fig. 5a durch eine Referenzachse R verdeutlicht. Die Lage des Übertragungskörpers 26 in einer Ausgangsstellung in Fig. 5a wird durch eine Auslenkungsachse A angedeutet.

In der Ausgangsstellung des Übertragungskörpers 26 ist die Kuppe 30 in die erste Aussparung 28 eingelassen. Die Ausgangsstellung des Übertragungskörpers 26 und damit auch die Ruheposition des Trägheitskörpers 1 wird dabei durch einen Anpressdruck der Federmechanik 31 stabilisiert. Gleichzeitig wird durch die äußere 31a die Verschlusseinheit 11 über den Ventilstößel 10 in der Offenstellung gehalten, in der weder der Einströmkanal 14 noch der Ausströmkanal 15 durch die Verschlusseinheit verschlossen ist.

Fig. 5a zeigt somit ein Ausführungsbeispiel, bei dem der Übertragungskörper 26 zur Übertragung der Auslenkungsbewegung des Trägheitskörpers 1 auf die Bewegungseinrichtung und die Verschlusseinheit 11 vorgesehen ist.

Fig. 5b zeigt die in Fig. 5a beschriebene Ausführungsvariante im Sicherheitszustand. Durch Wirkung einer Beschleunigungskraft, deren Betrag den vordefinierten Grenzwert überschreitet, kann der Trägheitskörper 1 aus der durch die Referenzachse R angedeuteten Ruheposition ausgelenkt werden. Über die Verbindungsachse 25 kann die Auslenkungsbewegung auf den Übertragungskörper 26 übertragen werden, welcher dadurch aus seiner Ausgangsstellung bewegt wird.
Dies wird in Fig. 5b durch die im Bezug auf die Referenzachse R verschobene Auslenkungsachse A dargestellt.

Bei der Auslenkungsbewegung wird die erste Aussparung 28 in eine andere Position verschoben. Die Kuppe 30 wird dabei formschlüssig aus der ersten Aussparung 28 herausgedrückt.

Durch eine Gestaltung der zweiten Aussparung 29 als ringförmige Nut, welche konzentrisch um den Mittelpunkt der ersten Aussparung 28 angeordnet ist, kann in der dargestellten Ausführungsvariante die Kuppe 30 nach Auslenkung des Trägheitskörpers 1 aus der Ruheposition in die zweite Aussparung 29 eingelassen werden. Die äußere Feder 31 a bewirkt einen Anpressdruck der Kuppe 30 gegen den Übertragungskörper 26 und damit ein Einrasten der Kuppe 30 in die zweite Aussparung 29. Durch das Einrasten kann eine formschlüssige Verbindung zwischen der Kuppe 30 und dem Übertragungskörper 26 entstehen, die den Trägheitskörper 1 in der ausgelenkten Position fixiert.

Die formschlüssige Verschiebung der Kuppe 30 durch die Bewegung des Übertragungskörpers 26 bei der Auslenkung des Trägheitskörpers 1 wird durch die innere Feder 31b auf den Ventilstößel 10 und damit auf die Verschlusseinheit 11 übertragen. Sie bewirkt eine Bewegung der Verschlusseinheit 11 aus der Offenstellung in die Schließstellung, in der die Verschlusseinheit 11 den Ausströmkanal 15 dicht verschließt. Um beim Einrasten der Kuppe 30 in die zweite Aussparung 29 eine Bewegung der Verschlusseinheit 11 aus der Schließstellung in die Offenstellung zu verhindern, kann die zweite Aussparung 29 weniger tief in den Übertragungskörper hineinragen als die erste Aussparung 28.

In der in den Figuren 5a und 5b beschriebenen Ausführungsform wird die Energie im Normalzustand in Form von potentieller Energie durch die Lagerung des Trägheitskörpers 1 gespeichert. Der Trägheitskörper 1 kann damit Teil der Energiespeichereinrichtung sein. Die mit dem Anpressdruck der äußeren Feder 31a in die erste Aussparung 28 eingelassene Kuppe 30 kann als Sperreinrichtung wirken, die eine Abgabe der Energie im Normalzustand unterbindet. Die Bewegungseinrichtung wird in dieser Ausführungsvariante durch den über die Verbindungsachse 25 mit dem Trägheitskörper 1 verbundenen Übertragungskörper 26 und den über die Kuppe 30 mit Hilfe der inneren Feder 31b verschobenen Ventilstößel 10 gebildet, da durch das Zusammenwirken dieser Strukturelemente die Auslenkungsbewegung des Trägheitskörpers 1 in eine Bewegung der Verschlusseinheit 11 umgesetzt wird.

Da in dieser Ausführungsvariante der Trägheitskörper 1 außerhalb des Gehäuses 7 gelagert ist, kann dieser unmittelbar manuell durch den Bediener aus der ausgelenkten Position in die Ruheposition bewegt werden. Dabei wird die Kuppe 30 durch die äußere Feder 31a in die Aussparung 28 eingelassen. Mit dem Einrasten der Kuppe 30 wird durch den Ventilstößel 10 und die äußere Feder 31a die Verschlusseinheit 11 in die Offenstellung bewegt. Der Normalzustand wird erreicht. Beim Anheben des Trägheitskörpers 1 aus der ausgelenkten Position in die Ruheposition ist eine Kraft aufzuwenden, die als potentielle Energie durch die Lage des Trägheitskörpers 1 im Normalzustand gespeichert wird.

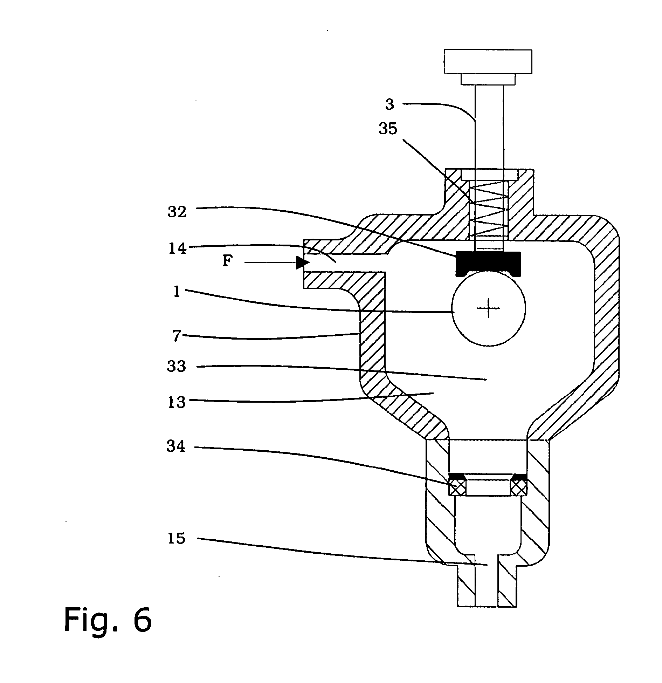

Fig. 6 zeigt eine weitere mögliche Ausgestaltung.

Die Ausführungsvariante weist einen Einströmkanal 14 auf, durch die das Fluid F in die Ventilkammer 13 einströmen kann. Weiterhin ist ein Ausströmkanal 15 vorgesehen, durch den das Fluid F aus der Ventilkammer 13 ausströmen kann. Der Trägheitskörper 1 wird durch eine aus magnetischem Material bestehende Kugel gebildet, welche in der Ruheposition durch eine Magnethalterung 32 gehalten wird. Die Magnethalterung 32 wird durch einen Magneten gebildet, welcher den Trägheitskörper 1 anzieht. Die magnetischen Eigenschaften der Materialien des Trägheitskörpers 1 und der Magnethalterung 32 sind derart zu wählen, dass der Trägheitskörper 1 durch die Wirkung einer Beschleunigungskraft, deren Betrag den vordefinierten Grenzwert überschreitet, von der Magnethalterung 32 gerissen und damit aus der Ruheposition ausgelenkt wird.

Das Gehäuse 7 ist in dieser Ausführungsvariante so gestaltet, dass der Trägheitskörper 1 durch eine beispielsweise seitlich wirkende Beschleunigungskraft aus der Ruheposition ausgelenkt werden kann und durch den Bewegungsraum 33 bewegt werden kann. Diese Bewegung des Trägheitskörpers 1 durch den Bewegungsraum 33 kann durch die Schwerkraft des Trägheitskörpers 1 und/oder durch eine Magnetkraft bewirkt werden. Der Trägheitskörper 1 wird so in eine definierte Auslenkungsposition bewegt.

Die Auslenkungsposition ist derart gewählt, dass der in der Auslenkungsposition befindliche Trägheitskörper 1 den Ausströmkanal 15 dicht verschließen kann. Der Trägheitskörper 1 kann daher als Verschlusseinheit wirken und die Auslenkungsposition kann der Schließstellung entsprechen. Der Ausströmkanal 15 ist im Ausführungsbeispiel daher an einer tief gelegenen Position angeordnet. Alternativ oder zusätzlich kann am Ausströmkanal 15 ein Verschlussmagnet 34 angeordnet sein, welcher die Öffnung des Ausströmkanals 15 umschließt und den Trägheitskörper 1 durch eine Magnetkraft in die Schließstellung bewegt. Durch die Magnetkraft kann der Trägheitskörper in der Schließstellung gehalten und die Dichtkraft erhöht werden.

In dieser Ausführungsvariante wird die Verschlusseinheit 11 durch den Trägheitskörper 1 gebildet. Die Offenstellung der Verschlusseinheit 11 wird durch die Ruheposition des Trägheitskörpers 1 bestimmt, die Schließstellung durch die Auslenkungsposition. Die Bewegungseinrichtung zum Bewegen der Verschlusseinheit 11 zwischen der Offenstellung und der Schließstellung wird durch den Bewegungsraum 33 gebildet. Weiterhin bildet der Trägheitskörper 1 in dieser Ausführungsvariante auch die Energiespeichereinrichtung, da im Normalzustand durch die Anordnung des Trägheitskörpers 1 an der Magnethalterung 32 potentielle Energie gespeichert wird.

Zum Rückstellen des Trägheitskörpers 1 in die Ruheposition, was einer Rückstellung der Verschlusseinheit 11 in die Offenstellung entspricht, ist in der Ausführungsvariante ein Rücksetzstößel 3 vorgesehen, welcher eine Bewegung der Magnethalterung 32 durch einen manuellen Eingriff des Bedieners ermöglicht. Der Rücksetzstößel 3 ist mit einer als Zugfeder wirkenden Rückstellfeder 35 mit dem Gehäuse 7 verbunden. Durch eine Bewegung des Rücksetzstößels 3 in das Gehäuse 7 hinein wird die Rückstellfeder 35 vorgespannt. Der in der Auslenkungsposition befindliche Trägheitskörper 1 kann dann durch eine Magnetkraft an der Magnethalterung 32 gehalten werden. Beim Loslassen des Stößels 3 wird dieser durch die Zugkraft der Rückstellfeder 35 aus dem Gehäuse 7 herausgeschoben, wobei der an der Magnethalterung 32 gehaltene Trägheitskörper 1 durch den Bewegungsraum 33 in die Ruheposition bewegt wird. Hierbei wird potentielle Energie durch Lagerung des Trägheitskörpers 1 in der Ruheposition gespeichert.

Falls, wie oben beschrieben, der Verschlussmagnet 34 vorgesehen ist, kann die Magnethalterung so gestaltet sein, dass ein Lösen des Trägheitskörpers 1 von dem Verschlussmagneten 34 ermöglicht wird.

Fig. 6 zeigt somit ein Ausführungsbeispiel, bei dem die Verschlusseinheit 11 durch den Trägheitskörper 1 gebildet wird, wobei dieser aus einem magnetischen Material besteht und durch eine Magnetkraft in der Ruheposition gehalten wird.

## Patentansprüche

1. Ventil, mit:
- einem Einströmkanal (14) zum Einströmen eines Fluids (F);
- einem Ausströmkanal (15) zum Ausströmen des Fluids (F);
- einem Trägheitskörper (1), dessen jeweilige Stellung einen jeweiligen Betriebszustand definiert, wobei der eine Betriebszustand ein Normalzustand ist, in dem der Trägheitskörper (1) in einer definierten Ruheposition angeordnet ist, und der andere Betriebszustand ein Sicherheitszustand, in dem der Trägheitskörper aufgrund einer Wirkung einer Beschleunigungskraft, deren Betrag einen vordefinierten Grenzwert überschreitet, aus der Ruheposition ausgelenkt ist;
- einer Verschlusseinheit (11), die zwischen einer Offenstellung, in welcher weder der Einströmkanal (14) noch der Ausströmkanal (15) durch die Verschlusseinheit (11) verschlossen ist, und einer Schließstellung, in welcher der Einströmkanal (14) und/oder der Ausströmkanal (15) durch die Verschlusseinheit (11) verschlossen ist, bewegbar ist;
- einer Bewegungseinrichtung zum Bewegen der Verschlusseinheit (11) zwischen der Offenstellung und der Schließstellung; und mit
- einer Energiespeichereinrichtung zum Speichern einer mechanischen und/oder magnetischen Energie;
wobei
- im Normalzustand die Energiespeichereinrichtung die Energie speichert und die Verschlusseinheit (11) in der Offenstellung steht, und wobei im Sicherheitszustand die Verschlusseinheit (11) durch die Bewegungseinrichtung mit Hilfe der Energie aus der Energiespeichereinrichtung aus der Offenstellung in die Schließstellung bewegt wird.

2. Ventil nach Anspruch 1, **dadurch gekennzeichnet, dass** eine Sperreinrichtung vorgesehen ist, welche
- im Normalzustand ein Abgeben der Energie durch die Energiespeichereinrichtung verhindert, und welche
- im Sicherheitszustand das Abgeben der Energie durch die Energiespeichereinrichtung zulässt.

3. Ventil nach Anspruch 2, **dadurch gekennzeichnet, dass** die Sperreinrichtung durch den Trägheitskörper (1) gebildet wird, der in der Ruheposition derart angeordnet ist, dass das Abgeben der Energie durch die Energiespeichereinrichtung verhindert wird.

4. Ventil nach einem der Ansprüche 1 bis 3, **dadurch gekennzeichnet, dass** die Energiespeichereinrichtung eine Federeinrichtung (4, 12) aufweist, welche sich
- im Normalzustand vorgespannt ist, und welche sich
- im Sicherheitszustand wenigstens teilweise entspannt.

5. Ventil nach einem der Ansprüche 1 bis 4, **dadurch gekennzeichnet, dass** die Bewegungseinrichtung einen Kniehebel (6) aufweist, welcher
- im Normalzustand durch den in der Ruheposition befindlichen Trägheitskörper (1) in einer Knickstellung gehalten wird, wodurch die Energie in der Energiespeichereinrichtung gehalten wird, und welcher
- im Sicherheitszustand nach der Auslenkung des Trägheitskörpers (1) durch das Abgeben der Energie der Energiespeichereinrichtung in eine Streckung überführt wird, wodurch die Verschlusseinheit (11) in die Schließstellung bewegt wird.

6. Ventil nach einem der Ansprüche 1 bis 4, **dadurch gekennzeichnet, dass** ein Schubelement (17, 19) vorgesehen ist, welches
- im Normalzustand durch den in der Ruheposition befindlichen Trägheitskörper (1) in einer Rückhaltestellung gehalten wird, und welches
- im Sicherheitszustand nach der Auslenkung des Trägheitskörpers (1) durch die Energie aus der Energiespeichereinrichtung in eine Schubstellung bewegt wird, wobei die Verschlusseinheit (11) durch die Bewegungseinrichtung in die Schließstellung bewegt wird.

7. Ventil nach Anspruch 6, **dadurch gekennzeichnet, dass** das Schubelement Teil (17, 19) der Energiespeichereinrichtung ist, und dass die Bewegung des Schubelements aus der Rückhaltestellung in die Schubstellung durch eine Schwerkraft des Schubelements (17), durch eine Federkraft der Federeinrichtung (12, 4) und/oder durch eine Magnetkraft bewirkt wird.

8. Ventil nach Anspruch 7, **dadurch gekennzeichnet, dass** das Schubelement (17) durch die Bewegungseinrichtung mit der Verschlusseinheit (11) fest verbunden ist.

9. Ventil nach Anspruch 7, **dadurch gekennzeichnet, dass** das Schubelement (19) durch ein Mitnehmerelement gebildet ist, welches nicht mit der Bewegungseinrichtung verbunden ist.

10. Ventil nach einem der vorhergehenden Ansprüche, **dadurch gekennzeichnet, dass** die Bewegungseinrichtung einen Kniehebel (6) mit einer Federeinrichtung aufweist, wobei der Kniehebel (6)
- im Normalzustand durch ein Vorspannen der Federeinrichtung (23) in einer Überstreckung vorspannbar ist, und
- im Sicherheitszustand durch den Trägheitskörper (1) in eine Knickung bewegt wird, wobei die Knickung durch ein Entspannen der Federeinrichtung (23) verstärkt wird und eine Bewegung der Verschlusseinheit (11) in die Schließstellung bewirkt.

11. Ventil nach Anspruch 10, **dadurch gekennzeichnet, dass** der Kniehebel (6) durch einen Stoß des Trägheitskörpers (1) bei der Auslenkung aus der Ruheposition aus der Überstreckung in die Knickung überführt wird.

12. Ventil nach einem der vorhergehenden Ansprüche, **dadurch gekennzeichnet, dass** der Trägheitskörper (1) Teil der Energiespeichereinrichtung ist.

13. Ventil nach Anspruch 12, **dadurch gekennzeichnet, dass** eine Auslenkungsbewegung bei der Auslenkung des Trägheitskörpers (1) durch eine formschlüssige Verbindung zur Bewegungseinrichtung übertragen wird, wodurch die Verschlusseinheit (11) in die Schließstellung bewegt wird.

14. Ventil nach Anspruch 13, **dadurch gekennzeichnet, dass**
- die Auslenkungsbewegung durch einen Übertragungskörper (26) übertragen wird,
- der Übertragungskörper (26) in einer Halterung (27) beweglich gelagert und mit dem Trägheitskörper (1) fest verbunden ist, und dass
- die formschlüssige Verbindung zur Bewegungseinrichtung durch eine erste Aussparung (28) im Übertragungskörper (26), welche bei der Auslenkungsbewegung in eine andere Position verschoben wird, erreicht wird.

15. Ventil nach Anspruch 14, **dadurch gekennzeichnet, dass** die Bewegungseinrichtung eine Kuppe (30) aufweist, welche im Normalzustand in die erste Aussparung (28) eingelassen ist, und welche beim Übergang in den Sicherheitszustand durch die Verschiebung der ersten Aussparung (28) in die andere Position formschlüssig verschoben wird, wobei die Verschlusseinheit (11) aus der Offenstellung in die Schließstellung bewegt wird.

16. Ventil nach Anspruch 15, **dadurch gekennzeichnet, dass** der Übertragungskörper (26) eine zweite Aussparung (29) aufweist, welche derart angeordnet ist, dass im Sicherheitszustand die Kuppe (30) der Bewegungseinrichtung in der zweiten Aussparung (29) eingelassen ist, wodurch der Trägheitskörper (1) in der ausgelenkten Position fixiert wird.

17. Ventil nach einem der vorhergehenden Ansprüche, **dadurch gekennzeichnet, dass**
- der Trägheitskörper (1) aus einem magnetischen Material besteht,
- ein Magnet (32) im Bereich der Ruheposition des Trägheitskörpers angeordnet ist, und dass
- der Trägheitskörper (1) im Normalzustand durch den Magneten (32) in der Ruheposition gehalten wird.

18. Ventil nach einem der vorhergehenden Ansprüche, **dadurch gekennzeichnet, dass** die Verschlusseinheit durch den Trägheitskörper (1) gebildet wird.

19. Ventil nach einem der vorhergehenden Ansprüche, **dadurch gekennzeichnet, dass** die Verschlusseinheit durch potentielle Energie in die Schließstellung bewegt wird.

20. Ventil nach einem der vorhergehenden Ansprüche, **dadurch gekennzeichnet, dass**
- die Verschlusseinheit aus einem magnetischen Material besteht, und dass
- die Verschlusseinheit durch magnetische Energie in die Schließstellung bewegt wird und/oder durch eine Magnetkraft der Schließstellung gehalten wird.

21. Ventil nach einem der vorhergehenden Ansprüche, **dadurch gekennzeichnet, dass** eine Rückstelleinrichtung (3, 24) zum Rückstellen der Verschlusseinheit (11) in die Offenstellung durch einen Bediener vorgesehen ist.

22. Ventil nach Anspruch 21, **dadurch gekennzeichnet, dass** beim Rückstellen der Trägheitskörper (1) in die Ruheposition bewegt wird.

23. Ventil nach Anspruch 21 oder 22, **dadurch gekennzeichnet, dass** beim Rückstellen die Energie in der Energiespeichereinrichtung durch ein Vorspannen einer Federeinrichtung (4, 12), ein Anheben eines Fallkörpers (1, 17) und/oder ein Erzeugen eines Magnetfeldes gespeichert wird.

## Claims

1. A valve having:
- an inflow channel (14) for the inflow of a fluid (F);
- an outflow channel (15) for the outflow of the fluid (F);
- an inert member (1), the respective position of which defines the respective operating condition, whereby one such operating condition is a normal condition, in which the inert member (1) is arranged in a defined rest position and the other operating condition is a safety condition, in which as a result of an effect of an acceleration force, the extent of which exceeds a predetermined threshold value, the inert member is swivelled out of its rest position;
- a closing element (11), which is movable between an open position, in which neither the inflow channel (14) nor the outflow channel (15) is closed by the closing element (11) and a closed position, in which the inflow channel (14) and/or the outflow channel (15) is closed by the closing element (11);
- a movement device for moving the closing element (11) between its opening and closing position, and
- an energy storage device for storing mechanical and/or magnetic energy;
whereby
- in the normal condition of the energy storage device, the energy is stored and the closing unit (11) is in its open position, and whereby in the safety condition the closing unit (11) is moved by the movement device with the aid of the energy from the energy storage device from its open position to its closed position.

2. Valve in accordance with Claim 1, **characterised in that** a locking device is provided, which
- in its normal condition prevents the delivery of energy from the energy storage device, and which
- in its safety condition allows the delivery of energy from the energy storage device.

3. Valve in accordance with Claim 2, **characterised in that** the locking device is formed from the inert member (1), which in its rest position is arranged in such a way that that the delivery of energy from the energy storage device is prevented.

4. Valve in accordance with any of the Claims 1 to 3, **characterised in that** the energy storage device comprises a spring device (4, 12), which
- in its normal condition is pre-tensioned, and which
- in its safety condition is at least partly relaxed.

5. Valve in accordance with any of the Claims 1 to 4, **characterised in that** the movement device comprises a toggle joint, which
- in its normal condition is held in an articulated position by the inert member (1) in its rest position, through which the energy is retained in the energy storage device, and which
- in its safety condition, once the inert member (1) has been extended as a result of a delivery of energy from the energy storage device, as a result of which the closing element (11) is moved into its closed position.

6. Valve in accordance with any of the Claims 1 to 4, **characterised in that** a pusher device (17, 19) is provided, which
- in its normal condition, is held in a retaining position by the inert element (1) in its rest position, and which
- in its safety condition, once the inert member (1) has been extended by the energy from the energy storage device into a pushing position, whereby the closing element (11) is moved into the closed position by the movement device.

7. Valve in accordance with Claim 6, **characterised in that** the pusher device (17, 19) is part of the energy storage device and that the movement of the pusher device is produced from the retaining position into the pushing position by a force from the pusher device (17), which is generated by a spring force from the spring device (12, 4) and/or by a magnetic force.

8. Valve in accordance with Claim 7, **characterised in that** the pusher device (17) is firmly connected to the closing device (11) by means of the movement device.

9. Valve in accordance with Claim 7, **characterised in that** the pusher element (19) is formed from a carrier element that is not connected to the movement device.

10. Valve in accordance with any of the above Claims, **characterised in that** the movement device comprises a toggle device (6), having a spring device, whereby the toggle device (6)
- in its normal condition, can be tensioned and stretched by tensioning the spring device (23), and
- in its safety conditions, is moved into a buckling position by the inert element (1), whereby the buckling position is amplified by the relaxation of the spring device (23) causing the closing element (11) to be moved into the closing position.

11. Valve in accordance with Claim 10, **characterised in that** the toggle joint (6) is transferred by an impact from the inert element (1) when swivelling out of its rest position from the overstretching to the buckling position.

12. Valve in accordance with any of the above Claims, **characterised in that** the inert element (1) is part of the energy storage device.

13. Valve in accordance with Claim 12, **characterised in that** in the swivelling of the inert element (1). A swivelling movement is transferred by means of a form-locking connection to the movement device, resulting in the closing device (11) being moved into the closed position.

14. Valve in accordance with Claim 13, **characterised in that**
- the swivelling movement is transferred by a transfer element (26),
- the transfer element (26) is movably mounted in a holder (27) and is firmly connected to the inert member (1), and that
- the form-locking connection to the movement device is achieved by means of a first recess (28) in the transfer element (26), which is moved during the swivelling movement into another position.

15. Valve in accordance with Claim 14, **characterised in that** the movement device comprises a cone (30), which, in its normal condition, slots into the first recess (28), and which, when switching to the safety condition by the displacement of the first recess (28), is inserted in a form-locking manner into the other position, whereby the closing element (11) is moved from the open position into the closed position.

16. Valve in accordance with Claim 15, **characterised in that** the transfer element (26) comprises a second recess (29), which is arranged in such a way that in the safety condition, the cone (30) of the movement device is inserted in the second recess (29), whereby the inert member (1) is held in the swivelled position.

17. Valve in accordance with any of the above Claims, **characterised in that**
- the inert element (1) consists of a magnetic material
- a magnet (32) is arranged in the proximity of the rest position of the inert element (1), and that
- the inert element (1) is, in its normal condition, held by the magnet (32), in its rest position.

18. Valve in accordance with any of the above Claims, **characterised in that** the closing element is formed from the inert member (1).

19. Valve in accordance with any of the above Claims, **characterised in that** the closing element is moved by potential energy into the closed position.

20. Valve in accordance with any of the above Claims, **characterised in that**
- the closing element consists of a magnetic material,
- the closing element is moved by magnetic force into the closed position and/or held by magnetic force in the closed position.

21. Valve in accordance with any of the above Claims, **characterised in that** a return device (3, 24) is provided in order to return the closing device (11) into the open position by an operator.

22. Valve in accordance with Claim 21, **characterised in that** when resetting, the inert member (1) is moved into its rest position.

23. Valve in accordance with Claim 21 or 22, **characterised in that** when resetting, by tensioning a spring device (4, 12), raising of a dropping device (1, 17) and/or the generation of a magnetic field, the energy is stored in the energy storage device.

## Revendications

1. Soupape, avec :
- un canal d'afflux (14) pour l'afflux d'un fluide (F) ;
- un canal d'écoulement (15) pour l'écoulement du fluide (F) ;
- un corps d'inertie (1), dont la position respective définit un état de service correspondant, un premier état de service étant un état normal, dans lequel le corps d'inertie (1) est disposé dans une position de repos définie, et l'autre état de service étant un état de sécurité, dans lequel le corps d'inertie est dévié de la position de repos sous l'effet d'une force d'accélération dont la grandeur dépasse une valeur limite prédéfinie ;
- une unité de fermeture (11) qui peut être déplacée entre une position ouverte, dans laquelle ni le canal d'afflux (14) ni le canal d'écoulement (15) ne sont fermés par l'unité de fermeture (11), et une position fermée, dans laquelle le canal d'afflux (14) et/ou le canal d'écoulement (15) est fermé par l'unité de fermeture (11) ;
- un dispositif de déplacement pour le déplacement de l'unité de fermeture (11) entre la position ouverte et la position fermée ; et avec
- un dispositif d'accumulation d'énergie pour l'accumulation d'une énergie mécanique et/ou magnétique ;
- à l'état normal, le dispositif d'accumulation d'énergie accumulant l'énergie et l'unité de fermeture (11) étant en position ouverte, et à l'état de sécurité, l'unité de fermeture (11) étant déplacée par le dispositif de déplacement à l'aide de l'énergie du dispositif d'accumulation d'énergie de la position ouverte à la position fermée.

2. Soupape selon la revendication 1, **caractérisée en ce qu'**un dispositif de blocage est prévu, lequel
- à l'état normal, empêche une fourniture d'énergie par le dispositif d'accumulation d'énergie, et
- à l'état de sécurité, autorise la fourniture d'énergie par le dispositif d'accumulation d'énergie.

3. Soupape selon la revendication 2, **caractérisée en ce que** le dispositif de blocage est formé par le corps d'inertie (1) qui est disposé dans la position de repos de telle sorte que la fourniture d'énergie soit empêchée par le dispositif d'accumulation d'énergie.

4. Soupape selon l'une quelconque des revendications 1 à 3, **caractérisée en ce que** le dispositif d'accumulation d'énergie présente un dispositif de ressort (4, 12) qui
- est précontraint à l'état normal, et qui
- se détend au moins en partie à l'état de sécurité.

5. Soupape selon l'une quelconque des revendications 1 à 4, **caractérisée en ce que** le dispositif de déplacement présente un levier à genouillère (6) qui
- est maintenu à l'état normal par le corps d'inertie (1) se trouvant dans la position de repos dans une position de flambage, grâce à quoi l'énergie est maintenue dans le dispositif d'accumulation d'énergie, et qui
- est transformé à l'état de sécurité après la déviation du corps d'inertie (1) par la fourniture d'énergie du dispositif d'accumulation d'énergie en une extension, grâce à quoi l'unité de fermeture (11) est déplacée dans la position fermée.

6. Soupape selon l'une quelconque des revendications 1 à 4, **caractérisée en ce qu'**un élément de poussée (17, 19) est prévu, lequel
- est maintenu à l'état normal par le corps d'inertie (1) se trouvant dans la position de repos dans une position de retenue, et qui
- est déplacé à l'état de sécurité après la déviation du corps d'inertie (1) par l'énergie du dispositif d'accumulation d'énergie dans une position de poussée, l'unité de fermeture (11) étant déplacée par le dispositif de déplacement dans la position fermée.

7. Soupape selon la revendication 6, **caractérisée en ce que** l'élément de poussée est une partie (17, 19) du dispositif d'accumulation d'énergie, et **en ce que** le déplacement de l'élément de poussée de la position de retenue à la position de poussée est provoqué par une force de gravité de l'élément de poussée (17), par une force de ressort du dispositif de ressort (12, 4) et/ou par une force magnétique.

8. Soupape selon la revendication 7, **caractérisée en ce que** l'élément de poussée (17) est relié fixement par le dispositif de déplacement à l'unité de fermeture (11).

9. Soupape selon la revendication 7, **caractérisée en ce que** l'élément de poussée (19) est formé par un élément d'entraînement qui n'est pas relié au dispositif de déplacement.

10. Soupape selon l'une quelconque des revendications précédentes, **caractérisée en ce que** le dispositif de déplacement présente un levier à genouillère (6) avec un dispositif de ressort, le levier à genouillère (6)
- pouvant être précontraint à l'état normal par une précontrainte du dispositif de ressort (23) dans un dépassement de la limite de contrainte admissible, et
- étant déplacé à l'état de sécurité par le corps d'inertie (1) dans un flambage, le flambage étant renforcé par une détente du dispositif de ressort (23) et provoquant un déplacement de l'unité de fermeture (11) dans la position fermée.

11. Soupape selon la revendication 10, **caractérisée en ce que** le levier à genouillère (6) est transporté par une poussée du corps d'inertie (1) lors de la déviation de la position de repos du dépassement de la limite de contrainte admissible dans le flambage.

12. Soupape selon l'une quelconque des revendications précédentes, **caractérisée en ce que** le corps d'inertie (1) est une partie du dispositif d'accumulation d'énergie.

13. Soupape selon la revendication 12, **caractérisée en ce qu'**un mouvement de déviation est transmis lors de la déviation du corps d'inertie (1) par une liaison à complémentarité de formes avec le dispositif de déplacement, grâce à quoi l'unité de fermeture (11) est déplacée dans la position fermée.

14. Soupape selon la revendication 13, **caractérisée en ce que**
- le mouvement de déviation est transmis par un corps de transmission (26),
- le corps de transmission (26) est logé de manière mobile dans un support (27) et est fixement relié au corps d'inertie (1), et **en ce que**
- la liaison à complémentarité de formes avec le dispositif de déplacement est atteinte par un premier évidement (28) dans le corps de transmission (26) qui est déplacé lors du mouvement de déviation dans une autre position.

15. Soupape selon la revendication 14, **caractérisée en ce que** le dispositif de déplacement présente une calotte (30) qui est emboîtée à l'état normal dans le premier évidement (28) et qui est déplacée lors du passage à l'état de sécurité par le déplacement du premier évidement (28) dans l'autre position par complémentarité de formes, l'unité de fermeture (11) étant déplacée de la position ouverte à la position fermée.

16. Soupape selon la revendication 15, **caractérisée en ce que** le corps de transmission (26) présente un second évidement (29) qui est disposé de telle sorte qu'à l'état de sécurité, la calotte (30) du dispositif de déplacement soit emboîtée dans le second évidement (29), grâce à quoi le corps d'inertie (1) est fixé dans la position déviée.

17. Soupape selon l'une quelconque des revendications précédentes, **caractérisée en ce que**
- le corps d'inertie (1) se compose d'un matériau magnétique,
- un aimant (32) est disposé dans la zone de la position de repos du corps d'inertie, et **en ce que**
- le corps d'inertie (1) est maintenu à l'état normal par l'aimant (32) dans la position de repos.

18. Soupape selon l'une quelconque des revendications précédentes, **caractérisée en ce que** l'unité de fermeture est formée par le corps d'inertie (1).

19. Soupape selon l'une quelconque des revendications précédentes, **caractérisée en ce que** l'unité de fermeture est déplacée par de l'énergie potentielle dans la position fermée.

20. Soupape selon l'une quelconque des revendications précédentes, **caractérisée en ce que**
- l'unité de fermeture se compose d'un matériau magnétique, et **en ce que**
- l'unité de fermeture est déplacée par de l'énergie magnétique dans la position fermée et/ou est maintenue par une force magnétique dans la position fermée.

21. Soupape selon l'une quelconque des revendications précédentes, **caractérisée en ce qu'**un dispositif de rappel (3, 24) est prévu pour le rappel de l'unité de fermeture (11) dans la position ouverte par un utilisateur.

22. Soupape selon la revendication 21, **caractérisée en ce que** lors du rappel, le corps d'inertie (1) est déplacé dans la position de repos.

23. Soupape selon la revendication 21 ou 22, **caractérisée en ce que** lors du rappel, l'énergie est accumulée dans le dispositif d'accumulation d'énergie par une précontrainte d'un dispositif de ressort (4, 12), un levage d'un corps de chute (1, 17) et/ou une génération d'un champ magnétique.
